# FASCICULE DE BREVET EUROPEEN

(11) **EP 2 750 494 B1**
(45) Date de publication et mention de la délivrance du brevet: **08.11.2017**
(21) Numéro de dépôt: 12762343.7
(22) Date de dépôt: 31.08.2012
(51) Int. Cl.: B32B 27/36, C08F 10/02, C08J 5/18, A01M 13/00, A01M 17/00, A01M 21/04, B32B 27/18, B32B 27/32, B32B 27/20, B32B 27/08, B32B 27/34

(54) **FILM PHOTOCATALYTIQUE POUR LA FUMIGATION DES SOLS**
PHOTOKATALYTISCHER FILM FÜR BODENVERGASUNG
PHOTOCATALYTIC FILM FOR THE SOIL FUMIGATION

(30) Priorité: 01.09.2011 FR 1157730
(43) Date de publication de la demande: 09.07.2014
(73) Titulaire: Arkema France, 92700 Colombes (FR)
(72) Inventeur: CHARLES, Patrick, F-64230 Sauvagnon (FR); FOUILLET, Thierry, F-64230 Sauvagnon (FR)
(86) Numéro de dépôt international: PCT/FR2012/051960
(87) Numéro de publication internationale: WO 2013/030513

(56) Documents cités:
- EP-A1- 1 460 109
- EP-A1- 1 609 816
- EP-A2- 2 386 594
- WO-A2-01/00716
- US-A- 4 819 374
- US-A- 5 391 609
- US-A- 5 674 618
- US-A1- 2005 202 236
- US-A1- 2008 044 629
- US-A1- 2009 130 158
- US-B1- 7 866 088
- DATABASE WPI Week 199750 Thomson Scientific, London, GB; AN 1997-545448 XP002669021, & JP 9 263502 A (NORINSUISANSHO NOGYO KANKYO) 7 octobre 1997 (1997-10-07) cité dans la demande

## Description

La présente invention concerne le domaine de la fumigation des sols, c'est-à-dire le traitement des sols ou des substrats de plantes (terreaux, tourbes, laine de roche...), en particulier les substrats destinés à l'agriculture, pour contrôler les nématodes, les champignons pathogènes, les mauvaises herbes, les insectes nuisibles ou les bactéries.

La technique de fumigation est aujourd'hui largement utilisée pour la désinfection des sols ou des substrats de plantes, notamment ceux destinés à l'agriculture intensive et notamment ceux destinés à l'arboriculture, à l'horticulture et au maraîchage.

Cette technique de fumigation met en oeuvre au moins un fumigant, généralement un composé pesticide volatil, qui est introduit dans le sol ou le substrat à traiter, selon diverses techniques connues de l'homme du métier, par exemple à l'aide de coutres, ou de buses d'injection dans le sol, ou encore par goutte à goutte (« drip » en langue anglaise). Cette technique de fumigation comprend également la mise en oeuvre d'au moins un fumigant sous forme de gaz ou de brouillard, au-dessus du sol ou du substrat de plante à traiter.

Le fumigant diffuse dans le sol ou plus généralement dans le substrat à désinfecter, mais remonte également à la surface et peut se dissiper dans l'atmosphère. De grandes quantités de fumigant peuvent ainsi être perdues, entraînant une perte d'efficacité du produit utilisé. En outre, le fumigant ainsi dissipé dans l'atmosphère peut être gênant, voire toxique pour les agriculteurs et l'entourage à proximité immédiate des cultures et champs traités.

Pour pallier cet inconvénient, il est courant de recouvrir le sol traité par fumigation avec un film polymère imperméable aux vapeurs du fumigant, comme décrit par exemple dans EP-A1-0 766 913. Cette bâche plastique, imperméable aux gaz, empêche ledit fumigant de se disperser dans l'air au-dessus du sol ou du substrat à traiter. De cette manière, il existe un espace entre le sol ou substrat et le film polymère, dans lequel les vapeurs de fumigant sont concentrées, renforçant ainsi l'efficacité dudit fumigant. Différents types de films, tels que films polyéthylène, ou de type SIF (« semi-impermeable film » en langue anglaise), VIF (« virtually impermeable film » en langue anglaise), ou TIF (« totally impermeable film » en langue anglaise), sont aujourd'hui utilisés lors des traitements des sols ou substrats par fumigation.

Les films pour la désinfection des sols agricoles peuvent être classés en deux catégories selon la durée d'utilisation :
a) Catégorie 1 : protection « simple » : Ces films sont maintenus en place pendant la durée de désinfection requise du substrat à traiter, puis sont retirés avant la mise en culture. Cette catégorie comprend deux sous catégories, selon que les films sont assemblés ou non entre eux par collage :
   i) films mis en place sans collage, film sur film
   ii) films dont l'état de surface permet l'assemblage des lés par collage *in situ* ;
b) Catégorie 2 : protection et paillage : Les films de cette catégorie assurent tout d'abord une protection pendant la désinfection, puis sont maintenus en place comme films de paillage.

Les films polymères sont avantageusement déposés sur le sol ou le substrat, avant ou après le traitement par fumigation, et laissés en place pendant la durée nécessaire pour permettre un contrôle efficace des nématodes, champignons phytopathogènes, mauvaises herbes, insectes nuisibles et autres bactéries. Après cette période de traitement, dont la durée dépend largement des sols ou substrats à traiter, des conditions climatiques, du type de culture envisagé, et autres, les films polymères peuvent être, le cas échéant, retirés ou simplement perforés, afin de permettre la plantation des cultures.

L'utilisation de films polymères dans les champs présente d'autres avantages tels que l'augmentation de la température du sol en particulier au début du printemps, la réduction des problèmes lies à l'apparition de mauvaises herbes, la conservation de l'humidité, la réduction du nombre de certains insectes ravageurs, les rendements plus élevés et une utilisation plus efficace des nutriments du sol.

La plupart des films de paillis sont généralement noirs pour le désherbage, blancs pour le refroidissement, ou clairs pour les désinfections de courte durée ou pour le chauffage du sol. La température du sol sous un paillis de plastique dépend des propriétés thermiques (réflexion, absorption ou transmission) du matériau particulier constitutif du film, par rapport au rayonnement solaire entrant.

Par exemple, les paillis noirs conservent l'humidité et la chaleur tout en préservant l'infestation par les mauvaises herbes. Le noir, couleur dominante utilisée dans la production de légumes, est un absorbeur opaque et un radiateur. Le paillis noir absorbe la plupart des longueurs d'ondes ultra-violettes (UV), visibles et infrarouges (IR) du rayonnement solaire incident et émet à nouveau une partie de l'énergie absorbée sous forme de rayonnement thermique ou infrarouge. Une grande partie de l'énergie solaire absorbée par le paillis de plastique noir est perdue dans l'atmosphère par rayonnement et par convection forcée.

En revanche, les films polymères transparents absorbent peu le rayonnement solaire, mais transmettent de 85% à 95% dudit rayonnement, avec une transmission relative qui est fonction de l'épaisseur et du degré d'opacité du film. La surface sous ces paillis polymères est généralement couverte de gouttelettes d'eau condensée. Cette eau est transparente pour le rayonnement à ondes courtes entrant, mais est opaque au rayonnement thermique infrarouge sortant, chaleur perdue dans l'atmosphère à partir d'un sol nu par rayonnement infrarouge mais qui est retenu par le paillis polymère transparent.

Les films blancs, quant à eux, peuvent entraîner une légère diminution de la température du sol par rapport à un sol nu, car ils réfléchissent, dans le couvert végétal, la majeure partie du rayonnement solaire incident. Ces paillis peuvent être utilisés pour établir une culture lorsque les températures du sol sont élevées comme par exemple dans les régions très ensoleillées et où toute réduction de la température du sol est bénéfique.

Il existe donc aujourd'hui une grande quantité de films polymères utilisés dans l'agriculture. L'utilisation de tels films pourrait être couplée à celle de l'utilisation de fumigant, comme indiqué précédemment. Toutefois, lors du retrait ou de la perforation du film polymère, le fumigant encore présent sous forme de vapeurs entre le sol et ledit film, s'échappe dans l'atmosphère et peut ainsi nuire à l'environnement, sans parler des opérateurs qui sont également largement exposés auxdites vapeurs dudit fumigant.

Afin d'éviter l'exposition des opérateurs aux vapeurs toxiques et/ou malodorantes des fumigants, il a été envisagé le port de masques filtrants ou d'appareils respiratoires spécifiques. Leur emploi est cependant peu commode, et on remarque souvent que les opérateurs n'emploient pas ces dispositifs pourtant souvent nécessaires.

En outre, les fumigants sont dans la plupart des cas des produits toxiques dont il convient d'éviter leur inhalation par les opérateurs et leur dissipation dans l'atmosphère. Tel est le cas par exemple du bromure de méthyle qui est de moins en moins utilisé aujourd'hui en raison de sa toxicité. Par ailleurs, le bromure de méthyle est maintenant banni par le protocole de Montréal, ce fumigant étant considéré comme substance capable de détruire la couche d'ozone stratosphérique.

La demande de brevet JP 9-263502 propose une autre solution permettant d'éviter la dispersion de bromure de méthyle dans l'atmosphère. Cette solution consiste à utiliser un film photocatalytique multi-couches, une couche supérieure perméable au rayonnement solaire, et une couche inférieure perméable au fumigant utilisé. Des particules de dioxyde de titane, agissant en tant que photocatalyseur, sont déposées selon un procédé dit de « spray/coating » sur la couche inférieure, puis recouvertes par laminage et soudure de la couche supérieure.

Toutefois, les films photocatalytiques présentés dans cette demande de brevet datant de 1996, ne sont pas totalement satisfaisants, et n'ont pas été, jusqu'à aujourd'hui, commercialisés. Leur préparation à l'échelon industriel semble difficile à réaliser, et surtout ces films ne présenteraient pas les propriétés mécaniques requises par les normes relatives aux films pour la désinfection des sols agricoles (AFNOR NF T 54-195), notamment en ce qui concerne les spécifications de délaminage, traction, déchirement, perforation lente, et aptitude du film au collage.

En outre, les particules de dioxyde de titane (TiO₂) déposées par spray présentent l'inconvénient de pouvoir être lessivées par l'eau de condensation ruisselant sur ou sous les films. Par ailleurs, la technique de spray-coating impose des vitesses de fabrication relativement faibles, entraînant ainsi un coût de fabrication final de ce type de structure élevé.

Plus précisément, les exemples de films catalytiques divulgués dans la demande de brevet JP 9-263502 sont des films composés d'une première couche de poly(chlorure de vinylidène) ou de nylon et d'une seconde couche de poly(éthylène) ou de poly(chlorure de vinyle). Entre ces deux couches est déposée une couche de particules ultra-fines de dioxyde de titane. L'ensemble est thermocollé sur au moins une partie de la surface du film. Non seulement ce film paraît donc très difficile à préparer, mais nécessite en outre une opération de thermocollage délicate, en présence des particules de photocatalyseur.

Un autre exemple présenté dans la demande de brevet JP 9-263502 montre un film bi-couche dans lequel la couche inférieure est constituée de poly(tétrafluoroéthylène) comprenant des particules ultra-fines de dioxyde de titane (jusqu'à un ratio quantitatif de 1:9). Il n'est pas indiqué quelle est la nature de l'autre film polymère constitutif du bi-couche.

La compatibilité des particules de titane avec le poly(tétrafluoroéthylène) ne semble pas optimale (le film ne paraît donc pas très solide pour les utilisations envisagées) puisque qu'il est indiqué, dans un autre exemple de cette même demande de brevet qu'il est préférable d'utiliser un floculant (« bulking agent »), tel que le talc, l'hydroxyde d'aluminium, le carbonate de calcium ou de la silice poreuse, pour obtenir une meilleure distribution des particules du photocatalyseur au sein de la matrice polymère.

Enfin, les films décrits dans la demande de brevet JP 9-263502 ne fonctionnent pas avec les films colorés car ils ne tiennent pas compte des colorants qui les composent et qui ont la faculté d'adsorber le rayonnement ultra-violet nécessaire à l'activité catalytique des particules de dioxyde de titane.

Tous ces exemples montrent que la fabrication de films photocatalytiques n'est pas aisée et demeure encore aujourd'hui difficilement industrialisable. Il reste par conséquent un besoin pour des films photocatalytiques, utilisables dans le domaine de la fumigation et donc imperméables aux vapeurs de fumigants, possédant une activité photocatalytique permettant la photocatalyse efficace des fumigants. De tels films devraient être facilement industrialisables et présenter une résistance mécanique adaptée aux utilisations envisagées, afin de pouvoir être aisément manipulés et étendus sur les sols ou substrats à traiter par fumigation.

Ainsi, et selon un premier aspect, la présente invention a pour objet un film photocatalytique comprenant au moins une couche polymère (1), ladite couche comprenant au moins un photocatalyseur, et étant à la fois perméable aux vapeurs d'au moins un composé fumigant et perméable au rayonnement ultra-violet capable d'activer le photocatalyseur.

Le photocatalyseur du film selon l'invention est un catalyseur apte à dégrader par photocatalyse ledit au moins un fumigant, comme décrit plus loin dans la présente description.

Le film selon la présente invention doit être perméable au rayonnement ultra-violet afin de permettre l'activation du photocatalyseur et la dégradation dudit au moins un fumigant. Le film selon la présente invention peut également éventuellement être perméable au rayonnement visible, c'est-à-dire être transparent, ou plus ou moins opaque. Comme on le verra plus loin, le film de la présente invention peut également être partiellement ou totalement opaque au rayonnement visible, voire être coloré, le choix de la transparence, de l'opacité et de la coloration du film dépendant de l'utilisation envisagée pour le film de la présente invention. Dans chacune de ces variantes, il doit être compris que le film de la présente invention est toujours perméable au rayonnement ultra-violet.

Par rayonnement ultra-violet, on entend un rayonnement de longueur d'onde généralement comprise entre environ 280 nm et environ 400 nm. Par rayonnement visible, on entend un rayonnement de longueur d'onde généralement comprise entre environ 400 nm et environ 800 nm.

Par « perméable au rayonnement ultra-violet », et par « perméable au rayonnement visible », on entend une couche polymère permettant au moins une transmittance d'environ 5%, de préférence environ au moins 10%, de préférence encore environ au moins 20%, du rayonnement ultra-violet et du rayonnement visible, respectivement. La transmittance est le rapport du flux de photons transmis par rapport au flux de photons incidents, les flux étant mesurés par spectrophotométrie UV ou visible dans la gamme de longueur d'onde considérée.

Par « perméable aux vapeurs d'au moins un composé fumigant » on entend la perméabilité définie selon la norme NF T 54-195, avec une valeur de perméabilité d'au moins (i.e. supérieure ou égale à) 0,2 g/m² • heure. À l'inverse, l'imperméabilité aux vapeurs de fumigant correspond à une perméabilité strictement inférieure à 0,2 g/m² • heure.

La couche polymère (1) est avantageusement un film polymère comprenant au moins un polymère A choisi de préférence parmi les polyoléfines et les polyesters. On préfère tout particulièrement les polyoléfines et les polyesters bio-sourcés et/ou biodégradables.

Par « polyoléfine » on entend, au sens de la présente invention, un polymère ou copolymère statistique ou à blocs, issu de la polymérisation, ou de la copolymérisation respectivement, de monomères qui sont des oléfines, de préférence choisies parmi l'éthylène, le propylène, le 1-butène, et autres, ainsi que leur mélanges.

À titre d'exemples de polyoléfines, on peut citer :
- les polymères à base de propylène, tels que les propylènes homopolymères, copolymères du propylène avec l'éthylène et/ou une oléfine comprenant de 4 à 10 atomes de carbone (ex. butène, pentène, hexène, et autres), les polypropylènes hétérophasiques ou leurs mélanges, ces polymères pouvant être obtenus par tout procédé connu de l'homme du métier, e.g. en suspension ou en phase gaz avec des catalyseurs de type Ziegler-Natta ou metallocène ;
- les polyéthylènes choisis parmi les homopolymères de l'éthylène ou les copolymères comprenant au moins 50% en moles d'éthylène et un ou plusieurs autres comonomères.

Selon un mode de réalisation préféré, la couche polymère (1) est constituée d'un polymère A qui est le polyéthylène obtenu par polymérisation, de préférence homopolymérisation d'éthylène. En variante, lorsque le polymère A est un copolymère, le comonomère est de préférence une α-oléfine. Les α-oléfines préférées possèdent de 2 à 30 atomes de carbone.

À titre d'α-oléfine, on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène.

À titre d'autres co-monomères des copolymères A, on peut également citer :
- les diènes tels que par exemple le 1,4-hexadiène, l'éthylidène-norbornène, le butadiène,
- les esters d'acides carboxyliques insaturés tels que par exemple les acrylates d'alkyle ou les méthacrylates d'alkyle regroupés sous le terme « (méth)acrylates d'alkyles », les chaînes alkyles de ces (méth)acrylates pouvant comporter jusqu'à 30 atomes de carbone, avec comme exemples de chaînes alkyles : méthyle, éthyle, propyle, n-butyle, sec-butyle, *iso*-butyle, *tert-*butyle, pentyle, hexyle, heptyle, octyle, 2-éthylhexyle, nonyle, décyle, undécyle, dodécyle, tridécyle, tétradécyle, pentadécyle, hexadécyle, heptadécyle, octadécyle, nonadécyle, eicosyle, héneicosyle, docosyle, tricosyle, tétracosyle, pentacosyle, hexacosyle, heptacosyle, octacosyle, nonacosyle, triacontyle, les (méth)acrylates de méthyle, éthyle et butyles étant préférés,
- les acides carboxyliques insaturés et leurs sels, par exemple l'acide acrylique ou l'acide méthacrylique et les sels de ces mêmes acides,
- les esters vinyliques d'acide carboxyliques, parmi lesquels on peut citer l'acétate de vinyle, le versatate de vinyle, le propionate de vinyle, le butyrate de vinyle, le maléate de vinyle, l'acétate de vinyle étant tout particulièrement préféré.

La synthèse de ces polymères et copolymères peut être effectuée par tout procédé connu en soi, et par exemple par polymérisation ou copolymérisation radicalaire haute pression (procédé autoclave ou tubulaire) ou selon deux méthodes principales dans le cas de copolymères linéaires : la méthode en solution et la méthode en lit fluidisé (en phase gazeuse). Dans ce dernier cas, le catalyseur utilisé peut être de type Ziegler-Natta ou métallocène, ou encore de type Phillips. Il est bien entendu possible d'utiliser des mélanges de deux ou plusieurs des polyoléfines et/ou co-polyoléfines décrites ci-dessus.

Parmi les polyesters utilisables comme polymère A, on préfère les polyesters bio-sourcés ou biodégradables, et de préférence encore ceux choisis parmi :
- les polylactides : par exemple, les polymères et copolymères de l'acide lactique (PLA) ou encore les polymères et copolymères de l'acide glycolique (PGA) ;
- les poly(hydroxyalcanoates), homo- ou co-polymères (ou PHA) : par exemple, les poly(hydroxybutyrates) (PHB), les copolymères d'hydroxybutyrate-valérate (PHBV), par exemple les poly(3-hydroxybutyrate)-poly(3-hydroxyvalérate), les copolymères d'hydroxybutyrate-hexanoate (PHBHx), et les copolymères hydroxybutyrate-hexanoate (PHBO) ;
- les succinates de poly(alkylène) (PAS), comme par exemple, le succinate de poly(éthylène) ou PES, et le succinate de poly(butylène) ou PBS ;
- d'autres polymères comme le succinate-adipate de poly(butylène) ou PBSA, l'adipatetéréphtalate de poly(butylène) ou PBAT, la poly(caprolactone) ou PCL, le poly(triméthylènetéréphtalate) ou PTT ;
- l'amidon thermoplastique (TPS) ou des mélanges à base d'amidon.

Il est bien entendu possible d'utiliser des mélanges de deux ou plusieurs des polyesters et co-polyesters décrits ci-dessus.

Le terme « biosourcé » ou « renouvelable » s'applique à une ressource naturelle dont le stock peut se reconstituer sur une période courte à l'échelle humaine, la ressource devant se renouveler aussi vite qu'elle est consommée. Dans le cadre de la présente invention, les matériaux bio-sourcés correspondent à des matériaux organiques dont les atomes de carbone proviennent de ressources non fossiles (cf. ASTM 6866 : Biobased Materials - organic materials in which the carbon comes from contemporary (non-fossil) biological sources).

Le terme « biodégradable » s'applique à un matériau qui peut être dégradé par des micro-organismes. Le résultat de cette dégradation est principalement la formation d'eau, de dioxyde de carbone et/ou de méthane, ainsi qu'éventuellement de sous-produits (résidus, nouvelle biomasse), non toxiques pour l'environnement.

Pour les besoins de la présente invention, on utilise avantageusement les polyoléfines choisies parmi le polypropylène, le polyéthylène, les copolymères de l'éthylène et d'une α-oléfine, les copolymères éthylène/(méth)acrylate d'alkyle, les copolymères éthylène/esters vinyliques d'acides carboxyliques.

La couche polymère (1), dont le polyéthylène est de manière particulièrement préférée le constituant principal, et avantageusement le constituant unique (polymère A), comprend en outre au moins un photocatalyseur apte à dégrader par photocatalyse ledit au moins un fumigant destiné à traiter le sol ou substrat de plantes. L'expression « apte à dégrader par photocatalyse ledit au moins un fumigant » signifie que le film photocatalytique, sous l'action du rayonnement ultra-violet, dégrade au moins une partie du ou des fumigant(s) destiné(s) à traiter le sol ou le substrat de plantes recouvert dudit film photocatalytique. Le degré de dégradation dépend bien entendu de la quantité de rayonnement ultra-violet, et est évaluée par comparaison avec un film de même nature mais non photocatalytique, c'est-à-dire ne comprenant pas de particules de photocatalyseurs. De telles mesures sont présentées dans les exemples présentés plus loin dans la description de l'invention.

L'effet photocatalytique correspond à l'effet photocatalytique bien connu de l'homme du métier et met en oeuvre des paires "électron - trou" photo-générées lorsque le film est soumis à un rayonnement de longueur d'onde inférieure à 400 nm. Ces paires "électron - trou" réagissent avec l'oxygène, l'humidité de l'air ambiant et les groupements hydroxyles ou produits organiques adsorbés à la surface des particules de photocatalyseur présentes dans le film pour donner des radicaux notamment des radicaux superoxydes et hydroxyles très oxydants. La photocatalyse permet donc de décomposer des molécules organiques à la surface des particules du photocatalyseur, grâce à la formation de radicaux libres qui amorceront une rupture des liaisons covalentes desdites molécules organiques.

Pour conférer l'effet photocatalytique aux films de la présente invention, les particules de photocatalyseur comprise dans ledit film présentent une granulométrie moyenne comprise entre 0,5 nm et 200 nm, de préférence entre 0,5 nm et 180 nm, de préférence encore entre 0,5 nm et 100 nm, avantageusement entre 1 nm et 50 nm, particulièrement entre 10 nm et 40 nm, plus particulièrement entre 15 nm et 30 nm.

La granulométrie moyenne (diamètre médian des particules de photocatalyseur) est mesurée par microscopie électronique par transmission (MET) à l'aide d'un appareil PHILIPS CM200 (200 KV, filament LaB6, résolution point par point de 0,27 nm). L'observation directe des images sur un écran est possible grâce à l'utilisation d'une caméra CCD haute résolution (11 Mpixels - modèle GATAN ORIUS 832). On mesure statistiquement les diamètres médians d'au moins 500 particules de photocatalyseur et on établit leur répartition granulométrique en nombre. La granulométrie moyenne est définie comme la valeur moyenne de toutes les particules mesurées.

Les particules de photocatalyseur étant des particules ultrafines (de taille nanométrique), leur mise en oeuvre peut être malaisée et présenter des risques de toxicité pour les utilisateurs. Les particules nanométriques de photocatalyseur peuvent, pour ces raisons entre autres, être disponibles dans le commerce sous forme de granulats, d'agrégats ou d'agglomérats dont la taille peut varier dans de larges proportions, par exemple entre quelques centaines de nanomètres à quelques micromètres, voir quelques dizaines de micromètres, par exemple entre environ 200 nm et 1 µm. Ces granulats, agrégats ou agglomérats de particules nanométriques photocatalytiques possèdent les mêmes propriétés photocatalytiques que les particules nanométriques qui les composent. Pour cette raison, ces granulats agrégats et agglomérats de particules nanométriques ne doivent pas être confondues avec les particules de diamètre médian plus élevé (supérieur à 200 nm) et qui sont généralement utilisées comme pigment et/ou agents de protection contre le rayonnement ultra-violet, comme on le verra plus loin dans la présente description.

Ledit au moins un photocatalyseur présent dans le film photocatalytique de la présente invention peut être choisi parmi les photocatalyseurs connus de l'homme du métier, et présentant une granulométrie moyenne telle que définie ci-dessus (0,5 nm à 200 nm), les plus couramment employés étant les oxydes, sulfures ou carbures de métaux présentant des propriétés semi-conductrices.

Avantageusement, et à titre d'exemples non limitatifs, le photocatalyseur présent dans le film selon la présente invention est choisi parmi le dioxyde de titane, le dioxyde de silicium, l'oxyde de zinc, le trioxyde de tungstène, le carbure de silicium, l'oxyde de fer Il ou de fer III, le dioxyde de cérium, le dioxyde de zirconium, le dioxyde d'étain, le sulfure de zinc, le sulfure de cadmium, le carbure de silicium, et autres, ainsi que les mélanges de deux ou plusieurs d'entre eux en toutes proportions.

De préférence le photocatalyseur est le dioxyde de titane nanométrique photocatalytique, en raison de ses performances et de son coût. Le dioxyde de titane existe sous trois formes cristallines qui sont la brookite, l'anatase et le rutile mais seules les structures anatase et rutile ont des propriétés photocatalytiques et trouvent une utilisation dans le film de la présente invention. La structure anatase est plus efficace que la structure rutile, cependant les mélanges anatase/rutile (de préférence environ 70/30 à environ 80/20 en poids respectivement) présentent de meilleurs résultats en terme de photocatalyse que l'une ou l'autre des structures seules.

Selon un mode de réalisation particulièrement préféré des films de la présente invention, le photocatalyseur est le dioxyde de titane nanométrique commercialisé par la société Evonik sous la dénomination Aeroxide® TiO₂ P 25. L'Aeroxide® TiO₂ P 25 est une poudre blanche composée des deux formes cristallines du TiO₂, l'anatase pour de plus de 70% (en poids) et de rutile dont les cristaux mesurent en moyenne 21 nm de diamètre moyen et présentent une surface spécifique de 35 m²/g à 65 m²/g. Il est également possible d'utiliser, comme indiqué précédemment, des granulats, agrégats ou agglomérats de particules de TiO₂ nanométriques, et en particulier des particules photocatalytiques de TiO₂ sous forme de granulats et notamment celles commercialisées par Evonik sous la dénomination Aeroperl® P25/20, dont les granulats présentent une taille moyenne d'environ 0,25 µm, et sont formés de particules primaires photocatalytiques de TiO₂ de diamètre médian d'environ 20 nm.

Comme indiqué précédemment, seul le TiO₂, dans ses formes cristallines rutile et anatase, présente une activité photocatalytique. La forme anatase étant beaucoup plus active que la forme rutile, c'est pratiquement la seule utilisée pour cette application. Le TiO₂ sous forme amorphe n'a pas d'activité photocatalytique. Le TiO₂ est partiellement cristallisé sous forme cristalline anatase, rutile ou sous forme d'un mélange d'anatase et de rutile avec un taux de cristallisation de préférence d'au moins 25%, de préférence d'au moins 30%, par exemple entre environ 30% et 80% en poids par rapport au poids total de TiO₂. Le taux de cristallisation et la nature de la phase cristalline sont mesurés par diffraction de rayons X (DRX), selon les techniques connues de l'homme du métier. Le taux de cristallisation représente la quantité en poids de TiO₂ cristallisé par rapport à la quantité totale en poids de TiO₂ dans le film. On préfère tout particulièrement, pour les particules de TiO₂ présentes dans le film, celles dont la nature de la phase cristalline est majoritairement la forme cristalline anatase. "Majoritairement" signifie que le taux d'anatase des particules de TiO₂ est supérieur à 50% en poids, de préférence supérieur à 60% en poids par rapport au poids total de particules de TiO₂. De préférence, les particules de TiO₂ utilisées dans les films de la présente invention présentent un taux d'anatase supérieur ou égal à 70%, de préférence encore supérieur ou égal à 80%.

Il est bien entendu possible d'utiliser un ou plusieurs des photocatalyseurs décrits ci-dessus, sous forme dopée, par tout type de dopes connus de l'homme du métier, tels que par exemple azote, chrome, manganèse, fer, platine, et autres. Il est également possible d'associer ces photocatalyseurs, dopés ou non, à d'autres semi-conducteurs absorbants dans le rayonnement visible, par exemple sulfure de cadmium (CdS), sulfure de bismuth (Bi₂S₃), ou trioxyde de tungstène (WO₃), et autres.

La quantité de photocatalyseur comprise dans la couche polymère (1) peut varier dans de grandes proportions notamment en fonction de l'effet recherché, de l'épaisseur et de la nature du film. En règle générale, la quantité de photocatalyseur est comprise entre 0,1% et 30% en poids de photocatalyseur par rapport au poids total de la couche polymère (1), de préférence de 0,1 à 20% en poids, de préférence encore de 0,1 à 10% en poids de photocatalyseur par rapport au poids total de la couche polymère (1).

L'incorporation de photocatalyseur dans la matrice polymère (1) peut être effectuée selon tout moyen connu de l'homme du métier pour l'incorporation de charges minérales dans une matrice polymère. On préfère toutefois réaliser ladite incorporation à partir d'un mélange-maître (« master-batch »), technique qui permet une répartition la plus homogène possible du photocatalyseur dans la matrice polymère. La concentration en photocatalyseur dans la matrice polymère pour ce mélange-maître peut varier de 10% en poids à 50% en poids de photocatalyseur par rapport au poids total de la matrice polymère comprenant ledit photocatalyseur. On obtient alors un mélange-maître polymère/photocatalyseur, dans lequel le photocatalyseur est dispersé de manière optimale à l'échelle nanométrique dans la matrice polymère.

Ainsi, selon un autre aspect, la présente invention concerne le procédé de préparation d'un film photocatalytique, selon toute méthode connue de l'homme du métier pour la préparation de films à partir de mélanges-maîtres, ledit procédé comprenant au moins les étapes suivantes :
a) préparation de granulés d'un mélange-maître à partir d'une première matrice d'au moins un polymère A tel que défini précédemment et de particules nanométriques, éventuellement sous forme de granulats, agrégats ou agglomérats, d'au moins un photocatalyseur, dont le diamètre médian est tel que défini précédemment, lesdites particules étant présentes en quantité comprise entre 10% en poids et 50% en poids par rapport au poids total du mélange-maître, par mélange de ladite première matrice et desdites particules, puis extrusion par exemple avec une extrudeuse type bis-vis ou un co-malaxeur de type Buss ; et
b) préparation d'un film photocatalytique à partir des granulés du mélange-maître obtenu à l'étape a) par incorporation d'une quantité comprise entre environ 5% et environ 50%, de préférence entre environ 5% et environ 30% en poids, par rapport au polymère final préparé, desdits granulés obtenus à l'étape a) dans une seconde matrice polymère (de nature identique ou différente, de préférence identique, à la première matrice polymère) fondue ou sous forme de granulés puis fondue.

Le procédé décrit ci-dessus permet l'incorporation d'une charge minérale, sous forme de granulés, directement avec les granulés de polymère du film à fabriquer, sans modifier la ligne d'extrusion habituellement utilisée (c'est-à-dire lors de la préparation de film sans ajout de particules de photocatalyseur), tout en assurant une répartition uniforme de ladite charge minérale dans cette matrice polymère.

L'épaisseur de la couche polymère (1) peut varier dans de grandes proportions. Toutefois, la couche polymère (1) doit être suffisamment épaisse pour conférer une résistance mécanique acceptable au film selon l'invention, et son épaisseur ne doit pas être trop importante afin de ne pas rigidifier ledit film, afin qu'il reste aisément manipulable.

En outre, l'épaisseur de la couche polymère (1) dépend de sa concentration en charge photocatalytique qui y est intimement liée. En effet, en agissant sur au moins un de ces deux paramètres (épaisseur et/ou taux de photocatalyseur), on peut maîtriser la cinétique de dégradation du fumigant en fonction des conditions climatiques et édaphiques, telles que le taux d'ensoleillement, le taux d'humidité, et autres.

Ainsi, à titre d'exemple, l'épaisseur de la couche polymère (1) peut être avantageusement comprise entre environ 5 µm et environ 100 µm, de préférence entre 5 µm et 75 µm, de préférence entre 5 µm et 60 µm, de préférence encore entre 5 µm et 50 µm.

Selon un mode de réalisation préféré, l'épaisseur de la couche polymère (1) des films photocatalytiques est comprise entre 5 µm et 50 µm et la teneur en photocatalyseur est comprise entre 0,05% et 10%, de préférence entre 0,1% et 6%, de préférence encore entre 1% et 3% en poids par rapport au poids total de la couche polymère (1).

Un autre avantage encore du film photocatalytique est que la couche polymère (1) comprend de préférence une distribution uniforme et homogène de particules de photocatalyseur sur toute l'épaisseur du polymère. Ainsi l'effet photocatalytique est grandement amélioré par rapport aux films photocatalytiques connus de l'art antérieur, et notamment celui divulgué dans le brevet JP 9-263502 où seule une couche fine de photocatalyseur est déposée sur le film polymère.

Sans être lié par la théorie, le film photocatalytique de l'invention agit au contraire comme un véritable réacteur de photocatalyse du fumigant, qui permet par conséquent d'atteindre l'effet recherché de photodégradation quasi totale dudit fumigant, évitant ainsi les émissions gazeuses potentiellement toxiques et/ou nauséabondes lors du retrait ou du percement des films polymères.

Selon une variante, le film photocatalytique de la présente invention est un film photocatalytique multi-couche comprenant :
a) au moins une couche polymère (1) tel que défini précédemment, et
b) au moins une couche d'un deuxième film polymère (2) imperméable aux vapeurs dudit au moins un fumigant et perméable au rayonnement ultra-violet.

Plus particulièrement, la couche polymère (2) est un film polymère comprenant au moins un polymère imperméable (i.e. de perméabilité inférieure à 0,2 g/m² • heure) au(x) fumigant(s) et perméable au rayonnement ultra-violet et éventuellement au rayonnement visible.

Selon un mode de réalisation particulièrement avantageux, la couche polymère (2) est choisie parmi les résines polaires azotées et/ou oxygénées, par exemple parmi les polyamides, les copolyamides, les copolymères saponifiés d'acétate de vinyle et d'éthylène (EVOH), les polyesters et copolyesters, par exemple acide polyglycolique (PGA), les amidons thermoplastiques et les mélanges de deux ou plusieurs d'entre eux en toutes proportions.

Par « polyamide » on entend, au sens de la présente invention, un polymère ou copolymère comprenant les produits de condensation :
- d'un ou plusieurs amino-acides, tels les acides aminocaproïques, amino-7-heptanoïque, amino-11-undécanoïque et/ou amino-12-dodécanoïque ;
- d'un ou plusieurs lactames, tels que caprolactame, cenantholactame et/ou lauryllactame ;
- d'une ou plusieurs diamines, éventuellement sous forme de sels, telles l'hexaméthylènediamine, la dodécaméthylènediamine, la métaxylylènediamine, le bis-para-aminocyclohexylméthane et/ou la triméthylhexaméthylène diamine avec un ou plusieurs diacides, par exemple choisi parmi les acides isophtalique, téréphtalique, adipique, azélaïque, subérique, sébacique et dodécanedicarboxylique ;
- ou des mélanges de ces monomères conduisant à des copolyamides.

Il est possible d'utiliser des mélanges de polyamide et/ou copolyamides.

Selon un mode de réalisation préféré, le polymère utilisé pour la couche (2) du film selon l'invention est le polyamide-6 ou le polyamide-6,6. Selon un autre mode de réalisation préféré, le polymère utilisé pour la couche (2) du film selon l'invention est un copolymère saponifié d'acétate de vinyle et d'éthylène (EVOH).

Comme pour la couche polymère (1), l'épaisseur de la couche polymère (2) peut varier dans de grandes proportions. La couche polymère (2) doit cependant être suffisamment épaisse pour être imperméable aux vapeurs du(des) fumigant(s), et son épaisseur ne doit pas être trop importante afin de ne pas rigidifier inutilement le film multi-couche, qui doit rester aisément manipulable.

À titre d'exemple, l'épaisseur de la couche polymère (2) peut être avantageusement comprise entre 2 µm et 25 µm, de préférence entre 2 µm et 15 µm, de préférence encore entre 2 µm et 10 µm. La présente invention comprend également les films photocatalytiques dans lesquels la couche polymère (2) est composée de plusieurs couches, par exemple PA6/EVOH/PA6 ou PA6/PE/PA6).

Les films selon la présente invention présentent en outre une résistance mécanique tout à fait appropriée à la manipulation sur le terrain, résistance mécanique qui se concrétise par une manutention beaucoup plus aisée. Notamment, les films ne se percent pas et ne se déchirent pas, même lorsque le film posé sur le sol est foulé par les pieds des utilisateurs, manutentionnaires, agriculteurs et autres.

Par comparaison avec un film ne comprenant pas de couche polymère (2) qui est une couche faisant barrière aux gaz, par exemple lorsque le film est un film polyéthylène seul, le film bi-couche comportant une couche polymère (1) et une couche polymère (2), telles qu'elles viennent d'être décrites, permet de réduire la quantité efficace initiale de fumigant, tout en présentant la même efficacité biologique.

La présente invention concerne, dans un mode de réalisation préféré, un film constitué d'au moins une couche polyoléfine photocatalytique (1) et au moins une couche polyamide et/ou d'EVOH (2) qui est disposé sur un sol ou un substrat agricole dans lequel ou sur lequel on injecte au moins un fumigant.

D'une manière générale, et dans la plupart des cas, les polymères de la couche (1) et de la couche (2) ne sont pas compatibles, c'est-à-dire que les deux films ne possèdent qu'une affinité modérée à faible l'un envers l'autre, pour pouvoir être assemblés sous forme de film bi-couche.

Il est en effet connu que certains polymères de natures différentes ne sont que peu compatibles entre eux, et les rendre solidaires est souvent difficile. Tel est en particulier le cas de films comprenant une couche à base de polyoléfine(s) et une couche à base de polyamide(s) ou d'EVOH.

Deux méthodes possibles peuvent être utilisées pour pallier cet inconvénient et améliorer l'adhésion entre la couche (1) et la couche (2) :
- a) utilisation d'un agent compatibilisant, connu de l'homme du métier, dans la couche (1) et/ou la couche (2), de préférence dans la couche (1), et/ou
- b) utilisation d'une couche (C) de « compatibilité » ou de « couplage », pouvant être comprise comme étant un liant de co-extrusion, entre les couches (1) et (2).

Par exemple, lorsque le film selon l'invention est un bi-couche dans lequel la couche (1) est un film copolymère polyoléfine « simple » (sans agent compatibilisant) et la couche (2) est du polyamide, l'adhésion entre les deux couches est sensiblement égale à zéro. En revanche lorsque le bi-couche est constitué d'un film copolymère polyoléfine (1) comprenant un agent compatibilisant et une couche (2) polyamide, l'adhésion entre la couche (1) et la couche (2), sans utiliser de liant entre ces couches, est grandement augmentée et atteint généralement des valeurs allant d'environ 4 à environ 10 N/15 mm.

Les tests d'adhésion entre les diverses couches constitutives des films selon la présente invention sont réalisée par mesure de pelage à 180°C, avec une vitesse linéaire de 200 mm/mn sur une largeur de film de 15 mm.

Dans la suite de la présente invention, on considère que les diverses couches constitutives d'un film selon la présente invention sont « compatibles » dès lors que la mesure par test au pelage décrit ci-dessus fournit une valeur d'adhésion entre deux couches d'au moins 1 N/15 mm, de préférence d'au moins 2 N/15 mm, de préférence encore d'au mois 3 N/15 mm, avantageusement d'au moins 4 N/15 mm.

En ce qui concerne la méthode a), dans le cas où le polymère (1) est une polyoléfine, les agents compatibilisants ou les liants de co-extrusion sont avantageusement choisis parmi les polyoléfines ci-dessous comprenant un monomère additionnel X :
- les polymères à base de propylène, choisis parmi les propylènes homopolymères, les copolymères du propylène avec l'éthylène ou un monomère comprenant de 4 à 10 atomes de carbone (par exemple butène, pentène, hexène, et autres), les polypropylènes hétérophasiques ou leurs mélanges, la synthèse de ces polymères pouvant être réalisée par tout procédé connu de l'homme du métier (par exemple en suspension, ou en phase gaz avec des catalyseurs de type Ziegler Natta ou metallocène) ;
- les polyéthylènes choisis parmi les homopolymères de l'éthylène ou les copolymères comprenant au moins 50% en moles d'éthylène et un ou plusieurs autres comonomères, lorsque le comonomère du copolymère est une α-oléfine, on préfère les α-oléfines ayant de 2 à 30 atomes de carbone, étant entendu qu'à titre de deuxième monomère, il peut être cité ceux choisis parmi :
   - les diènes, par exemple le 1,4-hexadiène, l'éthylidène norbornène, le butadiène,
   - les esters d'acides carboxyliques insaturés tels que par exemple les acrylates d'alkyle ou les méthacrylates d'alkyle, regroupés sous le terme (méth)acrylates d'alkyles, les chaînes alkyle de ces (méth)acrylates pouvant avoir jusqu'à 30 atomes de carbone, et parmi ces chaînes alkyle peuvent être citées les chaînes méthyle, éthyle, propyle, n-butyle, sec-butyle, iso-butyle, *tert*-butyle, pentyle, hexyle, heptyle, octyle, 2-éthylhexyle, nonyle, décyle, undécyle, dodécyle, tridécyle, tétradécyle, pentadécyle, hexadécyle, heptadécyle, octadécyle, nonadécyle, eicosyle, hencosyle, docosyle, tricosyle, tétracosyle, pentacosyle, hexacosyle, heptacosyle, octacosyle, nonacosyle, les esters d'acide carboxylique insaturés préférés étant les (méth)acrylates de méthyle, d'éthyle et de butyle ;
   - les esters vinyliques d'acide carboxyliques, parmi lesquels on peut citer l'acétate de vinyle, le versatate de vinyle, le propionate de vinyle, le butyrate de vinyle, ou le maléate de vinyle, de préférence l'acétate de vinyle.

Les polyoléfines listées ci-dessus sont issues de la copolymérisation avec au moins un monomère fonctionnel additionnel insaturé X choisi parmi les anhydrides d'acide carboxylique insaturé, les anhydrides de diacide carboxylique insaturé, les acides carboxyliques insaturés et les époxydes insaturés.

Plus précisément, en tant que monomère X, on peut citer :
- les époxydes insaturés, par exemple les esters et éthers de glycidyle aliphatiques tels que l'allylglycidyléther, le vinylglycidyléther, le maléate et/ou l'itaconate de glycidyle, l'acrylate et/ou le méthacrylate de glycidyle, mais aussi les esters et/ou éthers de glycidyle alicycliques tels que le 2-cyclohexène-1-glycidyléther, le carboxylate de cyclohexène-4,5-diglycidyle, le carboxylate de cyclohexène-4-glycidyle, le carboxylate de 5-norbornène-2-méthyl-2-glycidyle et/ou le dicarboxylate d'endo-*cis*-bicyclo(2,2,1)-5-heptène-2,3-diglycidyle, le méthacrylate de glycidyle étant tout particulièrement préféré ;
- les anhydrides d'acide carboxylique et/ou de diacide carboxylique, e.g. choisis parmi les anhydrides maléique, itaconique, citraconique, allylsuccinique, cyclohex-4-ène-1,2-dicarboxylique, 4-méthylènecyclohex-4-ène-1,2-dicarboxylique, bicyclo[2,2,1]hept-5-ène-2,3-dicarboxylique, et les méthylbicyclo[2,2,1]hept-5-ène-2,2-dicarboxyliques, l'anhydride maléique étant tout particulièrement préféré.

Dans ce dernier cas, les copolymères issus de la copolymérisation avec au moins un comonomère X peuvent avantageusement être obtenus par copolymérisation des monomères (premier comonomère, deuxième comonomère éventuel, et éventuellement monomère fonctionnel). On peut réaliser cette polymérisation par un procédé radicalaire à haute pression ou un procédé en solution, en réacteur autoclave ou tubulaire, ces procédés et réacteurs étant bien connus de l'homme du métier.

Selon un autre mode de réalisation, lorsque le monomère fonctionnel X n'est pas copolymérisé dans la chaîne polymère, par exemple polyoléfine, il peut est greffé sur ladite chaîne polymère, par exemple polyoléfine. Le greffage est également une opération connue de l'homme du métier. On se sortirait pas du cadre de la présente invention dans le cas où plusieurs monomères fonctionnels différents sont copolymérisés et/ou greffés sur la chaîne polymère, par exemple polyoléfine.

Il est bien entendu possible d'utiliser des mélanges de deux ou plusieurs polymères comprenant un ou plusieurs motifs issu(s) de la copolymérisation et/ou greffage d'un ou plusieurs comonomère(s) X décrits ci-dessus, tels que par exemple des mélanges de (co)polyoléfines avec des polyoléfines comprenant au moins un motif provenant d'un comonomère X. De tels polymères compatibilisants sont connus et décrits par exemple dans les brevets FR 2 291 225 et EP 0 342 066.

Dans le cas où le(s) polymère(s) de la couche polymère (1) est un copolyester bio-renouvelable et/ou biodégradable, le(s) liant(s) de co-extrusion ou agent(s) compatibilisant(s) peuvent par exemple être tels que ceux décrits dans le brevet WO 2008/149019.

La méthode b) indiquée précédemment pour améliorer l'adhésion entre la couche (1) et la couche (2) met en oeuvre une couche (C) de compatibilité ou de couplage, intercalée entre deux couches non compatibles

Cette couche (C) peut également être comprise comme étant un liant de co-extrusion lorsque les deux premières couches (1) et (2) sont préparées par extrusion.

Cette couche (C) permettant la compatibilité entre les couches (1) et (2) peut avantageusement être une couche polymère. Les polymères assurant la compatibilité entre polyoléfines et polyamides sont bien connus de l'homme du métier et peuvent par exemple être choisis parmi les copolymères d'oléfine(s) et de monomères X tels qu'ils ont été définis plus haut, par exemple des polyoléfines greffées par des acides ou esters (méth)acryliques, et en particulier choisis parmi :
- le polyéthylène, le polypropylène, les copolymères éthylène/α-oléfine, par exemple éthylène/propylène, les copolymères éthylène/butène, tous ces produits étant greffés par des anhydrides d'acides carboxyliques insaturés tels que par exemple de l'anhydride maléique ou du méthacrylate de glycidyle,
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé,
- les copolymères éthylène / (méth)acrylate d'alkyle / méthacrylate de glycidyle, le méthacrylate de glycidyle étant greffé ou copolymérisé,
- les copolymères éthylène / acétate de vinyle / méthacrylate de glycidyle, le méthacrylate de glycidyle étant greffé ou copolymérisé,
- les copolymères éthylène / acide (méth)acrylique éventuellement leurs sels,
- le polyéthylène, le propylène ou les copolymères éthylène/propylène, ces polymères étant greffés par un produit présentant un site réactif avec les amines, tels que par exemple anhydride maléique, époxy, et autres, ces copolymères greffés étant ensuite condensés avec des polyamides ou des oligomères polyamides ayant une seule extrémité amine, par exemple avec des oligomères mono-aminés de caprolactame, comme décrits par exemple dans les brevets US 5 070 145 et EP 0 564 338,
- des mélanges d'un ou plusieurs de ces polymères et/ou copolymères.

Comme indiqué plus haut, de tels polymères compatibilisants sont connus et décrits par exemple dans les brevets FR 2 291 225 et EP 0 342 066.

La couche (C) peut éventuellement comprendre au moins un photocatalyseur, de nature et en quantité identiques à celles décrites ci-dessus pour la couche polymère (1). La quantité dudit au moins un photocatalyseur compris dans la couche (C) peut cependant être inférieure à celle présente dans la couche polymère (1). L'incorporation dudit au moins un photocatalyseur dans la couche polymère (C) peut être effectuée selon toute méthode connue de l'homme du métier, et en particulier selon la méthode décrite ci-dessus pour l'incorporation dudit au moins un photocatalyseur dans la couche polymère (1).

Tous ces films constitutifs du film multi-couche selon la présente invention peuvent être fabriqués selon toute technique connue de l'homme du métier, et par exemple selon les techniques habituelles d'extrusion, de co-extrusion de gaines, extrusion et co-extrusion de cast films, et autres, à l'aide d'une ou plusieurs extrudeuses.

En variante, le ou les polymères compatibilisants décrits plus haut peuvent être incorporés dans la couche (1) ou dans la couche (2) ou encore dans les deux couches (1) et (2) définies précédemment.

Dans les cas ci-dessus, la quantité de polymère compatibilisant est la quantité suffisante pour que les polymères des couches (1) et (2) puissent être assemblés en film ayant les propriétés barrière et les propriétés mécaniques citées plus haut. Cette quantité est fonction des groupes réactifs contenus dans la polyoléfine et dans le polymère compatibilisant lui-même. L'homme du métier peut déterminer facilement cette quantité. À titre d'exemple, cette quantité peut être de 5 à 20 parties de polymère compatibilisant, pour 100 parties en poids de polymère de couche (1) et de polymère de couche (2).

De préférence, le mélange de polymère de couche (1) et/ou de polymère de couche (2) avec le polymère compatibilisant se présente sous forme d'une matrice polymère des nodules de polymère (utilisé pour la préparation de la couche (1) et/ou de la couche (2)) ou d'un mélange desdits polymères. On fabrique ces mélanges de polymères selon les techniques usuelles de mélange à l'état fondu (bi-vis, Buss, monovis), et autres méthodes bien connues de l'homme du métier.

Grâce au polymère compatibilisant, sous forme de couche intermédiaire (C) ou incorporé dans la couche (1) et/ou la couche (2), on peut obtenir ainsi des adhésions supérieures à environ 3 N/15 mm. À titre d'exemple, l'épaisseur de la couche polymère compatibilisant (C) peut être avantageusement comprise entre 2 µm et 15 µm.

Les différents polymères et/ou copolymères constituants les films multi-couches selon l'invention peuvent contenir également un ou plusieurs additifs connus de l'homme du métier choisis parmi les antioxydants, les agents de protections U.V., les agents de mise en oeuvre, les agents pour éviter les défauts d'extrusion, les agents anti-buée, les agents anti-bloquants, les agents antistatiques, les agents nucléants et les colorants. Ces agents peuvent être ajoutés dans une ou plusieurs des couches constitutives des films de la présente invention, selon des techniques et dans des proportions massiques bien connues de l'homme du métier.

En particulier, les films photocatalytiques de la présente invention peuvent comprendre un ou plusieurs agents, organiques et/ou minéraux, de protection contre le rayonnement ultra-violet. En effet, les films de l'invention sont destinés à être exposés pendant de longues périodes au rayonnement solaire et sont ainsi susceptibles d'être dégradés sous l'effet du rayonnement ultra-violet (UV). S'ils ne sont pas protégés, cette dégradation se traduit par un film plastique devenant opaque et friable. Selon un mode de réalisation préféré, les films photocatalytiques de la présente invention comprennent, outre des nanoparticules de photocatalyseur, au moins un agent protecteur contre la dégradation due au rayonnement UV, dont le plus connu et communément utilisé est le TiO₂ dans sa forme non photocatalytique, de préférence transparent au rayonnement visible (400 nm à 800 nm), mais qui doit faire barrière au rayonnement UV (280 nm à 400 nm), c'est-à-dire du TiO₂ non photocatalytique.

Comme agent de protection contre le rayonnement UV, il est par conséquent possible d'utiliser des particules non-photocatalytiques, comme par exemple le TiO₂ de taille micronique (pigment), ou du TiO₂ nanométrique (photocatalytique), ou tout autre photocatalyseur, dont l'effet photocatalytique est inhibé, par exemple par enrobage desdites particules. De telles particules à effet photocatalytique inhibé mais qui possèdent des propriétés de protection contre le rayonnement UV sont par exemple le TiO₂ recouvert d'un film de SiO₂ ou Al₂O₃ ou ZrO₂ ou d'autres oxydes métalliques. Ce traitement permet de passer d'une activité photocatalytique de 6,01 mol/gh pour un TiO₂ submicronique non recouvert à 0,11 mol/gh pour un TiO₂ submicronique recouvert d'un film d'oxyde métallique, ce qui est similaire à du rutile recouvert utilisé comme pigment (0,07 mol/gh) et bien plus faible que de l'anatase pigment (0,87 mol/gh) (voir « Handbook of Fillers », ChemTec, 3rd Edition, (2010), page 148).

L'utilisation du TiO₂ comme pigment est connue pour donner l'opacité et la couleur blanche aux films plastiques de paillage. Le TiO₂ pigment aura un maximum d'opacité à la couleur désirée si le diamètre des particules qui le compose est égal à la moitié de la longueur d'onde de ladite couleur désirée. Par exemple, pour une lumière bleu vert à laquelle l'oeil est le plus sensible, la longueur d'onde moyenne est de 460 nm, donc un diamètre de particules de 230 nm donnera le maximum d'opacité au rayonnement visible.

On utilise avantageusement pour cette application le TiO₂ rutile qui possède le plus fort indice de réfraction et qui est de 2,75. On utilisera par exemple, du dioxyde de titane rutile Ti-Pure® R-105 de DuPont ou du Sachtleben® R 620 K de Sachtleben à base de rutile d'une taille moyenne de cristaux de 210 nm. Ces films plastiques blancs n'ont aucune activité photocatalytique, et peuvent rester plus d'un an sur un champ sans dégradation due aux UV.

Un autre avantage des films photocatalytiques de la présente invention réside dans le fait qu'ils comprennent au moins un agent photocatalytique, éventuellement en association avec au moins un agent protecteur contre le rayonnement, selon que l'on souhaite que le film ne soit pas dégradé par le rayonnement UV ou faiblement dégradé ou lentement dégradé par ledit rayonnement UV. Il est donc possible de préparer des films photocatalytiques qui comprennent à la fois un photocatalyseur, par exemple l'Aeroxide® TiO₂ P25 d'Evonik et un pigment blanc protecteur, tel que Ti-Pure® R-105 de DuPont ou Sachtleben® R 620 K de Sachtleben. L'Aeroxide® TiO₂ P25 n'est pas utilisé comme pigment blanc pour la coloration des films plastiques car la taille de ses particules est trop petite pour réfracter le spectre de la lumière visible et donc donner une couleur blanche homogène et opaque.

Les doses respectives de photocatalyseur et d'agent de protection contre le rayonnement UV seront adaptées par l'homme du métier selon l'effet photocatalytique souhaité et la durée de protection du film souhaité, en fonction notamment de la durée du traitement par fumigation envisagé, des conditions atmosphériques et édaphiques et de la durée et de la quantité d'ensoleillement observées sur les sols et substrats agricoles à traiter.

Selon une variante de l'invention, les films photocatalytiques peuvent également comprendre une ou plusieurs couches polymères (3) dites de « renfort », placée(s) au-dessus et/ou au-dessous de la couche polymère (1) ou des couches polymères (1) et (2) ou encore intercalée(s) entre les couches (1) et (2).

Ces couches de renfort permettent de renforcer encore la structure du film photocatalytique. Bien entendu, une couche renfort placée au-dessous du ou des autre(s) couche(s) devra être perméable aux vapeurs du fumigant, tandis que la couche de renfort placée au-dessus du ou des autre(s) couche(s) devra être perméable au rayonnement U.V., et avantageusement imperméable aux vapeurs du fumigant.

La nature de ces couches de renfort peut être de tout type connu de l'homme du métier, et ces couches peuvent en particulier comprendre un ou plusieurs des polymères définis pour les couches polymères (1) et (2) définies précédemment. Il doit être compris que l'adhésion de la ou des couche(s) (3) de renfort peut être améliorée par incorporation dans la ou les couche(s) (3) d'au moins un compatibilisant, ou encore être co-extrudée(s) avec un polymère de compatibilité, comme décrit précédemment.

Selon encore une autre variante, l'invention concerne des films pour fumigation tels qu'ils viennent d'être décrits et comprenant en outre une ou plusieurs couches colorées. Comme mentionné précédemment, les films ou bâches plastiques couramment utilisés sur les sols ou les substrats de culture peuvent nécessiter d'être colorés, selon que l'on souhaite bénéficier de la température de l'air ou du sol, préserver un certain degré d'humidité ou autres.

Les films de la présente invention peuvent ainsi comprendre une couche additionnelle colorée (4), blanche, noire, ou toute autre couleur définie selon les besoins et les conditions climatiques et édaphiques. Cette couche additionnelle colorée pouvant être peu perméable voire imperméable au rayonnement U.V., forme la partie inférieure du film selon l'invention, c'est-à-dire que la couche colorée doit se trouver du côté du sol ou du substrat.

En outre, et afin que le fumigant puisse atteindre la couche active, la couche polymère (1) comprenant le photocatalyseur, la couche colorée doit être perméable audit fumigant. Ainsi, la couche colorée est une couche polymère, avantageusement constituée du ou des même(s) polymère(s) que celui(ceux) utilisé(s) pour la couche polymère (1), ladite couche colorée (ou pigmentée) comprenant en outre au moins un colorant (ou pigment) dont la couleur et la quantité dépendent de la couleur final souhaitée du film multi-couches selon la présente invention.

La couche colorée (4) peut éventuellement comprendre au moins un photocatalyseur, de nature et en quantité identiques à celles décrites ci-dessus pour la couche polymère (1). Lorsque la couche colorée (4) comprend au moins un photocatalyseur comme indiqué ci-dessus, cette couche colorée (4) peut ainsi agir sur les vapeurs de fumigant, tout comme la couche polymère (1) qu'il peut donc être envisagé de supprimer du film photocatalytique selon l'invention. L'incorporation dudit au moins un photocatalyseur dans la couche colorée (4) peut être effectuée selon toute méthode connue de l'homme du métier, et en particulier selon la méthode décrite ci-dessus pour l'incorporation dudit au moins un photocatalyseur dans la couche polymère (1).

Par ailleurs, dans le cas où la couche colorée et la couche adjacente ne sont pas compatibles entre elles, il est possible d'améliorer l'adhésion entre ces deux couches en utilisant un agent compatibilisant ou une couche de compatibilité, selon l'une des deux solutions a) et/ou b) décrites précédemment.

Les films colorés sont soit disponibles commercialement soit facilement obtenus selon des procédés connus de l'homme du métier, par exemple par introduction de pigment(s) dans la matrice polymère. Le film multi-couche selon l'invention peut ainsi présenter une épaisseur totale comprise par exemple entre 10 µm et 300 µm, de préférence de 20 µm et 150 µm.

Le film multi-couche selon l'invention peut être posé sur le sol soit avant de procéder à l'injection de fumigant(s), soit aussitôt après cette injection. Il est recommandé si on pose le film avant l'injection de ne pas endommager le film avec les injecteurs, et de prévoir un système d'étanchéité, par exemple par superposition et collage des bandes de films, et/ou par enfouissement dans la terre des bordures de films, et/ou toutes autres techniques connues de l'homme du métier.

Les films photocatalytiques selon l'invention présentent, outre une bonne résistance mécanique et des propriétés d'effet barrière aux gaz, la capacité de photocatalyser les fumigants qui sont emprisonnés entre le sol ou substrat et ledit film. Cette photocatalyse permet la décomposition, grâce au rayonnement ultra-violet, par exemple le soleil, lampes utilisées dans les serres et autres, des composés organiques souvent toxiques et/ou malodorants qui sont utilisés pour la fumigation desdits sols et substrats.

Grâce aux films photocatalytiques de la présente invention, il est possible d'utiliser tout type de fumigants connus de l'homme du métier, choisis parmi les nématicides, herbicides, fongicides, insecticides, et bactéricides, par exemple ceux répertoriés dans «Pesticide Manual, Tenth édition, Ed. Clive Tombin). Par « fumigant dans la présente invention, on entend tout type de composé phytosanitaire remplissant à la fois au moins les deux conditions essentielles suivantes : (i) ne pas présenter, aux doses auxquelles il est actif, aucune phytotoxicité sur les cultures mises en place après le traitement et (ii) posséder la propriété essentielle et rare de ne pas être complètement absorbé dans les sols ou substrats de culture et de diffuser rapidement, sous la forme gaz, dans l'épaisseur du sol à traiter, les organismes phytopathogènes se trouvant souvent jusqu'à 50 centimètres au moins en-dessous de la surface dudit sol ou dudit substrat. De plus, pour des raisons évidentes de productivité, ainsi que pour limiter le risque de nouvelle infestation, le temps de traitement pendant lequel le fumigant agit doit être le plus court possible.

À titre d'exemples non limitatifs de fumigants, on peut citer le bromure de méthyle, l'iodure de méthyle, l'isothiocyanate de méthyle (MITC), le 1,3-dichloropropène, la chloropicrine, le fluorure de sulfuryle (SO₂F₂), la phosphine, le tétrathiocarbonate ou autres composés générateurs de MITC, comme par exemple le Métam-sodium et le Dazomet, ainsi que certains composés soufrés, comme les sulfures d'alkyle, les disulfures de dialkyle, les polysulfures de dialkyle, les thiosulfinates et autres, ainsi que les mélanges de deux ou plusieurs d'entre eux en toutes proportions.

Tous ces composés fumigants sont connus et largement décrits dans la littérature. La demande internationale WO 2002/074083 décrit en particulier des fumigants à base de composés soufrés, et en particulier les composés répondant à la formule générale (I)

R-S(O)ₙ-Sₓ-R' (I)

dans laquelle R est choisi parmi les radicaux alkyle et alcényle contenant de 1 à 4 atomes de carbone, n est égal à 0, 1 ou 2, x prend les valeurs allant de 0 à 4, bornes comprises, et R' est choisi parmi les radicaux alkyle et alcényle contenant de 1 à 4 atomes de carbone ou, seulement lorsque n = x = 0, R' peut représenter un atome d'hydrogène ou de métal alcalin.

Les fumigants cités ci-dessus, seuls ou en mélanges, et en particulier ceux de formule (I) ci-dessus, sont tout particulièrement adaptés à la fumigation de sols ou de substrats, en utilisation conjointe avec les films photocatalytiques décrits précédemment car ils remplissent trois conditions essentielles pour pouvoir être utilisés pratiquement en désinfection des sols ou des substrats : ils présentent des propriétés pesticides globales (nématicides, fongicides, herbicides, insecticides, bactéricides) ; ils sont capables de diffuser rapidement dans l'épaisseur du sol à traiter ; et ils conduisent à une concentration en gaz suffisante pour tuer les organismes phytopathogènes présents.

Parmi les fumigants connus aujourd'hui, on préfère pour les besoins de la présente invention ceux répondant à la formule (I) ci-dessus. En effet, comme substituts au bromure de méthyle, les composés de formule (I) sont d'autant plus intéressants que certains sont déjà présents dans la nature en provenance de la dégradation naturelle des crucifères et des alliums. En particulier, les thiosulfinates, inclus dans la formule générale (I), sont des produits émis naturellement lorsque l'on broyé des alliums et, à ce titre, peuvent être utilisés en agriculture biologique.

D'autre part, les composés de formule (I) ne contiennent pas d'atomes d'halogènes générateurs de radicaux halogénés responsables de la destruction catalytique de l'ozone stratosphérique, les composés de formule (I) sont sans danger pour la couche d'ozone. Comme exemples non limitatifs de radicaux R et R', on peut citer les radicaux méthyle, propyle, allyle et 1-propényle.

Parmi les composés de formule (I), on préfère ceux pour lesquels n = 0, c'st-à-dire les composés répondant à la formule (I') :

R-S-Sₓ-R' (I')

dans laquelle R et R', identiques ou différents, de préférence identiques, représentent chacun indépendamment l'un de l'autre, un radical alkyle ou alcényle, de préférence alkyle, contenant de 1 à 4 atomes de carbone, et x représente 1, 2, 3 ou 4.

D'autres composés préférés sont les disulfures (n = 0, x = 1) et plus particulièrement le disulfure de diméthyle (DMDS).

Les fumigants décrits ci-dessus, et en particulier les composés de formule (I), décrits ci-dessus peuvent être utilisés à l'état pur ou sous diverses formes, par exemple en émulsions, en microémulsions, aqueuses, organiques ou hydro-organiques, sous forme de concentré émulsionnable, sous formes de produits micro-encapsulés, nano-encapsulés ou supportés par un solide, en solutions aqueuses, organiques, ou hydro-organiques, ou encore en mélange avec un ou plusieurs produits ayant une activité pour le traitement des sols ou des substrats.

Toutes les formulations définies ci-dessus peuvent être réalisées selon des méthodes bien connues de l'homme du métier. Ainsi, par exemple, les émulsions aqueuses et les microémulsions peuvent être obtenues en additionnant un ou plusieurs tensio-actifs au composé fumigant, puis en rajoutant au mélange obtenu une certaine quantité d'eau de façon à obtenir une émulsion stable ou une microémulsion.

Sont plus particulièrement adaptés à la préparation des émulsions aqueuses ou des microémulsions les tensio-actifs à caractère majoritairement hydrophile, c'est-à-dire ceux ayant une HLB ("Hydrophilic Lipophilic Balance") supérieure ou égale à 8, qui peuvent être de nature anionique, cationique, non ionique ou amphotère.

Comme exemples non limitatifs de tensio-actifs anioniques, on peut citer les sels de métal alcalin, alcalino-terreux, d'ammonium ou de triéthanolamine des acides alkyl-, aryl- ou alkylaryl-sulfoniques, des acides gras à pH basique, de l'acide sulfosuccinique ou des esters alkyliques, dialkyliques, alkylaryliques ou polyoxyéthylène-alkylaryliques de l'acide sulfosuccinique. On peut également citer les sels de métal alcalin ou alcalino-terreux des esters d'acide sulfurique, phosphorique, phosphonique ou sulfoacétique et d'alcools gras saturés ou insaturés, ainsi que leurs dérivés alkoxylés. D'autres tensio-actifs encore sont représentés par les sels de métal alcalin ou alcalino-terreux des acides alkylarylsulfuriques, alkylarylphosphoriques, alkylarylsulfoacétiques, ainsi que leurs dérivés alkoxylés.

Les tensio-actifs cationiques utilisables sont, par exemple, ceux de la famille des alkylammonium quaternaires, des sulfoniums ou des amines grasses à pH acide, ainsi que leurs dérivés alkoxylés, Comme exemples non limitatifs de tensio-actifs non ioniques, on peut citer les alkyl-phénol alkoxylés, les alcools alkoxylés, les acides gras alkoxylés, les esters gras de glycérol ou les dérivés gras du sucre.

Les tensio-actifs amphotères utilisables sont, par exemple, les alkyl-bétaïnes ou les alkyl-taurines. Les tensio-actifs préférés pour la préparation des émulsions aqueuses et des microémulsions sont les composés à base d'alkyl-benzène-sulfonate et d'alkyl-phénol alkoxylé.

Pour les formulations de fumigant(s) sous forme de solution, les solvants organiques utilisables sont les hydrocarbures, les alcools, les éthers, les cétones, les esters, les solvants halogénés, les huiles minérales, les huiles naturelles et leurs dérivés ainsi que les solvants polaires aprotiques tels que le diméthylformamide, le diméthylsulfoxide ou la N-méthylpyrrolidone. Conviennent particulièrement bien les solvants biodégradables, plus particulièrement les esters méthyliques des huiles de colza.

Selon une variante de la présente invention, deux ou plusieurs fumigants peuvent être utilisés, conjointement, en mélange, de manière alternée ou séquencée. En particulier peuvent être utilisés deux ou plusieurs fumigants ayant des activités complémentaires ou synergiques choisis parmi le 1,3-dichloropropène, le fluorure de sulfuryle (SO₂F₂), la phosphine, l'iodure de méthyle, la chloropicrine (Cl₃C-NO₂), le Métam-sodium (CH₃-NHCS₂Na), le tétrathiocarbonate de sodium (Na₂CS₄), le MITC (CH₃-NCS), le Dazomet (générateur de MITC), et les composés de formule (I), et en particulier les disulfures de dialkyle, par exemple le DMDS.

Dans le cadre de la présente invention, c'est-à-dire en association avec les films photocatalytiques, les fumigants et les compositions les contenant peuvent être appliqués suivant l'une quelconque des méthodes classiques d'introduction de pesticides dans le sol, comme par exemple l'injection par coutres qui permet d'introduire le produit en profondeur, la pulvérisation sur le sol, le goutte à goutte par un système d'irrigation classique ou l'aspersion du type « sprinkler ». Après l'introduction du ou des produits fumigants dans le sol ou le substrat de culture, il est possible d'effectuer une répartition, par exemple par roto-bêche dans le cas d'une injection dans le sol.

Les doses de fumigant(s) généralement appliquées pour obtenir l'effet désiré se situent généralement entre 150 g/ha et 1000 kg/ha, de préférence entre 1 kg/ha et 750 kg/ha et dépendent de la nature du ou des fumigants utilisés, du degré d'infestation du sol, de la nature des ravageurs et des organismes phytopathogènes, du type de culture et de sol ou de substrat, et des méthodes d'application.

Aux doses indiquées ci-dessus, on observe l'effet pesticide général recherché (à la fois nématicide, fongicide, herbicide, insecticide et bactéricide) et aucun effet phytotoxique ou seulement négligeable. On ne sortirait pas du cadre de la présente invention en associant le traitement par un composé de formule (I) avec un traitement (simultané ou non) avec une ou plusieurs autres substances pesticides, insecticides et/ou fongicides et/ou avec un engrais.

La présente invention concerne également l'utilisation des films photocatalytiques tels qu'il viennent d'être décrits dans les procédés de fumigation des sols ou substrats destinés aux cultures, en particulier aux cultures maraîchères et horticoles, telles que, par exemple et à titre non limitatif, fraises, salades, tomates, melons, concombres, aubergines, carottes, pommes de terre, fleurs ornementales et autres.

Les films de la présente invention peuvent également être utilisés sur des sols, des substrats ou plus simplement des articles qui ne sont pas nécessairement destinés aux cultures, mais qui subissent des infestations fongiques, et/ou des infestations d'insectes, nématodes, et autres insectes, larves, lentes, nuisibles. Les utilisations possibles sont par exemple, dans les domaines du stockage du bois, du foin, de la paille, de céréales, en plus généralement toute denrée alimentaire ou non et susceptible d'être dégradée par des fongis, des insectes, des larves, des nématodes et autres.

L'invention a également pour objet un kit de traitement par fumigation comprenant au moins un film photocatalytique tel que décrit précédemment, et au moins un fumigant, de préférence au moins un composé organique volatil soufré, de préférence de formule (I) ou de formule (I'), de préférence encore ledit fumigant étant le disulfure de diméthyle.

Un autre objet de la présente invention est un procédé de fumigation d'un sol, d'un substrat cultivable ou d'un article, comprenant au moins les étapes suivantes :
a) application dans ledit sol, substrat ou article, et/ou à la surface dudit sol, substrat ou article, d'au moins un fumigant, tel qu'il vient d'être défini ;
b) couverture totale ou partielle dudit sol, substrat ou article par un film photocatalytique, tel que défini précédemment, avant ou après l'étape a) ;
c) exposition au rayonnement ultra-violet dudit film photocatalytique, pendant une durée pouvant varier de quelques jours à plusieurs semaines ; et
d) retrait éventuel, total ou partiel ou simple perforation, dudit film photocatalytique.

Dans le procédé décrit ci-dessus, il est ainsi envisagé la possibilité d'injecter au moins un fumigant entre le film et le substrat.

À l'étape d) du procédé ci-dessus, le film selon l'invention peut être retiré, lorsque l'on considère que le(s) fumigant(s) a(ont) rempli son(leur) rôle. Grâce au photocatalyseur, le(s) fumigant(s) est(sont) au moins partiellement voire totalement dégradé(s) et le retrait du film n'entraîne que peu voire aucune nuisance ni pour le manipulateur ni pour l'environnement.

En variante, le film peut être retiré en partie seulement, voire rester en place. Dans ce dernier cas, le film peut être perforé en un ou plusieurs endroits prédéfinis, là où seront plantées les cultures, telles que les transplants par exemple.

L'injection dans le sol du ou des fumigants peut être réalisée selon toute technique connue de l'homme du métier, et par exemple telles qu'elles ont été décrites précédemment.

Le film photocatalytique peut être déposé sur le sol, substrat ou article, avant ou après cette étape de fumigation, par exemple par simple déroulage du film sur ledit sol, substrat ou article. Il convient d'assurer une étanchéité satisfaisante, par exemple en enterrant les bords du film, afin d'éviter toute fuite du fumigant dans l'atmosphère, le fumigant devant être retenu, pendant la durée requise de fumigation entre le sol, substrat ou article et le film photocatalytique.

L'effet photocatalytique est assuré par une exposition au rayonnement ultra-violet, par exemple la lumière directe du soleil ou encore par l'intermédiaire de lampes à rayonnement ultra-violet, utilisées par exemple pour les cultures en serres.

Le rayonnement ultra-violet a pour effet l'action photocatalytique des particules de photocatalyseur(s) qui dégrade les vapeurs du ou des fumigants qui se dégagent du sol ou substrat traité. Après destruction photocatalytique des vapeurs du ou des fumigants, les films plastiques peuvent être retirés en totalité ou en partie des sols ou substrats pour permettre la plantation des cultures dans les sols ainsi traités par fumigation.

Un autre avantage du procédé de fumigation de l'invention mettant en oeuvre les films photocatalytiques tel qu'ils viennent d'être définis réside dans le fait que les produits de dégradation photocatalytique des fumigants peuvent être utiles à la croissance des cultures.

En effet, certains fumigants peuvent être décomposés, sous l'effet du rayonnement ultra-violet et du photocatalyseur, en produits minéraux utiles à la croissance de cultures. C'est le cas notamment des composés fumigants contenant du soufre, et plus particulièrement des fumigants de formule (I) définis plus haut, et tout particulièrement des disulfures de dialkyle, comme le DMDS par exemple, qui sont décomposés par photocatalyse en divers produits d'oxydation du soufre, jusqu'à la formation de sulfates.

Les sulfates sont des engrais bien connus des cultures. Ainsi, le procédé de fumigation selon l'invention, mettant en oeuvre au moins un fumigant comportant au moins un atome de soufre, par exemple au moins un fumigant de formule (I), par exemple le DMDS, et un film photocatalytique tel que défini précédemment, permet non seulement un traitement efficace des phytopathogènes présents dans les sols et substrats des cultures, mais aussi un apport d'engrais utile à la croissance desdites cultures.

Les Figures annexées à la présente description illustrent quelques exemples de modes de réalisation de l'invention, sans toutefois en limiter la portée.

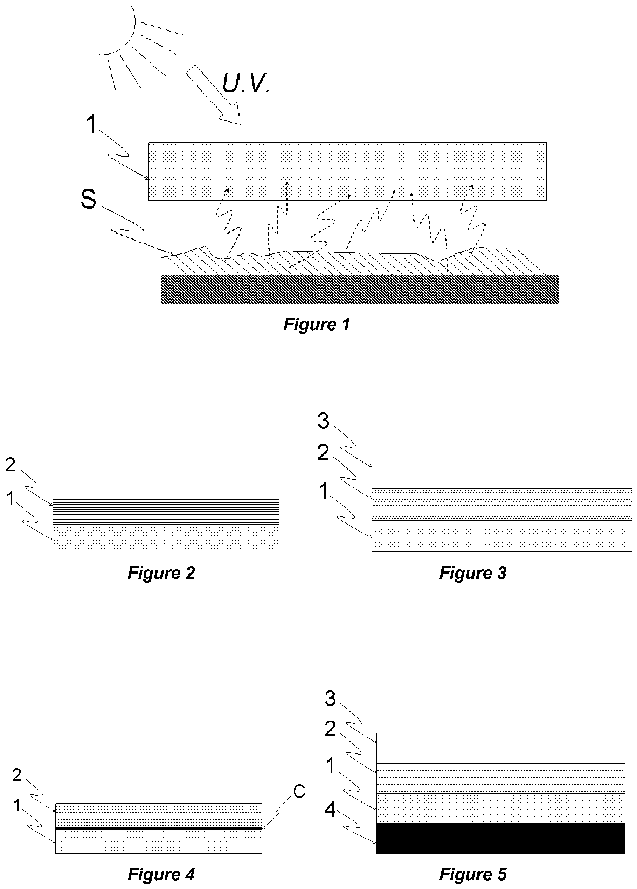

La Figure 1 représente schématiquement un film pour fumigation selon l'invention comprenant une couche polymère (1) chargée en photocatalyseur. Cette couche polymère (1) est disposée au dessus d'un substrat (S) et est irradiée par le rayonnement solaire. Cette couche polymère (1) est perméable au rayonnement U.V. solaire qui vient activer le photocatalyseur. Les vapeurs de fumigant sont représentées par les flèches pointillées. Ces vapeurs peuvent traverser la couche polymère (1), perméable auxdites vapeurs du fumigant et entrent en contact avec les particules photocatalytiques. Le fumigant est ainsi photocatalysé avant de pouvoir traverser totalement la couche polymère (1).

La Figure 2 représente une variante d'un film photocatalytique selon l'invention comprenant :
- une couche polymère (1) chargée en particules de photocatalyseur, perméable aux vapeurs du fumigant et perméable au rayonnement U.V. et
- une couche polymère (2) imperméable aux vapeurs du fumigant et perméable au rayonnement U.V.

La Figure 3 représente une autre variante d'un film photocatalytique selon l'invention comprenant une couche polymère (1) et une couche polymère (2) comme indiqué à la Figure 2, ainsi qu'une couche polymère (3) de renfort, cette couche polymère (3) étant elle-même perméable au rayonnement U.V.

La Figure 4 représente une autre variante encore d'un film selon l'invention comprenant une couche polymère (1) et une couche polymère (2) comme indiqué à la Figure 2, ainsi qu'une couche de compatibilité (C) telle que définie plus haut.

La Figure 5 représente également une variante d'un film photocatalytique selon l'invention comprenant une couche polymère (1), une couche polymère (2), une couche polymère (3), comme indiqué à la Figure 3, ainsi qu'une couche polymère colorée (4), cette couche polymère (4) étant elle-même perméable aux vapeurs du fumigant. Les vapeurs du fumigant traversent la couche polymère (4) et atteignent la couche polymère active (1) où les vapeurs du fumigant entrent en contact avec les particules de photocatalyseur soumises au rayonnement U.V. qui a traversé les couches polymères (2) et (3).

Les exemples ci-dessous illustrent l'invention sans toutefois en limiter la portée définie par les revendications annexées.

### Exemple 1 : Préparation d'un film polyéthylène chargé en TiO₂ photocatalytique

### a) Préparation du mélange-maître

On utilise une micro-extrudeuse, modèle DSM Research micro 15 bi-vis. La chambre a une capacité de 15 mL avec six zones de chauffe (température maximale : 350°C) et une vitesse de rotation des vis pouvant varier de 1 à 250 tours par minute. Le refroidissement peut être effectué sous air ou avec un circuit d'eau.

Le polyéthylène utilisé est un LDPE (polyéthylène linéaire basse densité) avec un « melt flow index » (MFI) de 1 g/10 min (190°C / 2,6kg) sous forme de granulés, commercialisé par Aldrich (référence : 428078). Le dioxyde de titane sous forme de poudre est l'Aeroxide® TiO₂ P 25 de Evonik.

On prépare un mélange-maître, dans la micro-extrudeuse, à une température de 235°C, pour une température moyenne du fondu d'environ 224°C, avec une vitesse des deux vis co-rotatives fixée à 200 tours par minute. Le temps de malaxage après stabilisation du « couple » est de 5 minutes.

On prépare ainsi 14 g d'un mélange-maître LDPE-TiO₂ 70/30, par mélange de 9,8 g de LDPE et de 4,2 g de TiO₂. En sortie d'extrudeuse, on obtient un jonc de 3 mm de diamètre. Ce mélange-maître est noté MB1 dans la suite.

### b) Préparation du film PE/TiO₂

Les conditions opératoires sont identiques à celles de la préparation du mélange-maître, à savoir : température de travail 235°C, température moyenne du fondu : environ 224°C, vitesse des deux vis co-rotatives fixée à 200 tours par minute, temps de malaxage après stabilisation du « couple » : 5 minutes.

On prépare ainsi 10 g d'un film polymère PE contenant 10% en poids de dioxyde titane à partir d'un mélange de 6,67 g de LDPE et 3,33 g du mélange-maître préparé à l'étape a). À la sortie de la micro-extrudeuse, le mélange se présente sous la forme d'un jonc.

Pour obtenir un film dont l'épaisseur moyenne est de 500 µm, à partir du jonc préalablement fabriqué, on utilise une presse, avec une température de travail de 150°C, un temps de pressage de 30 secondes, et une pression de pressage de 10⁷ Pa. Pour obtenir un film dont l'épaisseur moyenne est de 50 µm, à partir du jonc préalablement fabriqué, on effectue un étirage du jonc selon les techniques classiques connues de l'homme du métier, par exemple selon la technique d'extrusion de film à plat (« cast film » en langue anglaise).

Des films sont réalisés sur une ligne de laboratoire 3 couches de chez Dr Collin, équipée de 3 extrudeuses et d'une filière à mandrins spiralés (50 mm de diamètre). La structure co-extrudée symétrique est la suivante :
- couche PE de 15 µm (LDPE 2200TC00 de Sabic), contenant 15% d'un agent de couplage sur base PE (Orevac® OE825), la température d'extrusion est fixée à 220°C ;
- couche de PA6 de 15 µm (Durethan® C38F), la température d'extrusion est fixée à 230°C ;
- couche de PE de 15 µm (LDPE 2200TC00 de Sabic), cette couche contient 15% de mélange-maître MB1 et 15% d'un agent de couplage sur base PE (Orevac OE825), le mélange-maître MB1 sur base LDPE (d ∼ 918, MI = 1) contenant 30% de dioxyde de titane nanométrique (Aeroperl® P25/20 de Evonik) a été réalisé au préalable par compoundage bi-vis selon les règles connues de l'homme de l'art ; la température d'extrusion est de 220°C.

La température de la filière est fixée à 230°C, l'entrefer de la filière est réglé à 1,2 mm, le taux de gonflement à 2,5 et la vitesse de ligne à 5 m/mn. Le film obtenu a une largeur de 200 mm. L'adhésion mesurée à l'interface PE/PA6 est de 10 N/15 mm. Le test est réalisé par un test de pelage en T à 200 mm/mn.

### Exemple 2 :

L'efficacité des différents types de films est testée avec le DMDS dans un réacteur étanche de 0,35 L en Pyrex, transparent aux UV, avec une humidité relative de 90% et à une température de 45°C, pour reproduire les conditions réelles en champ. Le film est bloqué entre les parois et la fenêtre supérieure du réacteur, la couche active étant orienté vers le fond du réacteur. Le film est irradié par le dessus à travers la fenêtre en Pyrex.

L'illumination solaire est fournie grâce à un simulateur solaire Newport de 150 Watt, équipé d'une lampe au xénon, sans ozone, dont l'intensité lumineuse est ajustée à 1 soleil. La distance entre la fenêtre en Pyrex du réacteur et la lampe peut être ajustée pour contrôler le pouvoir d'irradiation. Une cellule solaire de calibration ORIEL 91150 permet la détermination de la quantité de lumière en unité « soleil » pour le simulateur solaire. Avec ce simulateur, tous les tests sont réalisés avec un (1) « soleil », équivalent à 1000 W.m⁻² (100 mW.cm⁻²) à 25°C. La surface irradiée est de 28 cm².

La concentration en DMDS et en gaz carbonique (CO₂) a été suivie automatiquement toutes les 10 minutes par chromatographie en phase gazeuse (chromatographe Varian® 4900) équipé d'un détecteur TCD et de 2 colonnes chromatographiques (CP-Sil5CB pour le DMDS et Porapak® pour le CO₂).

De l'air synthétique sans eau et sans CO₂ est introduit dans le réacteur. Le DMDS et l'eau sont introduits dans le réacteur avec une micro-seringue à travers un septum. Tous les tests sont conduits en parallèle, sous irradiation d'une part et sans irradiation (dans le noir) d'autre part. Le test sans irradiation correspond au test témoin.

### Test 1 : Test sur film polyéthylène

Le film testé est un film mono-couche de polyéthylène (PE) de 50 µm d'épaisseur et chargé avec 1,3% en poids de TiO₂, sous une humidité relative de 86%, à une température de 45°C et une concentration en DMDS de 10114 ppmv. On mesure une diminution linéaire de la concentration en DMDS de 30% après 6 jours d'irradiation.

### Test 2 : Test sur films transparents VIF-TiO₂

Pour ce test, on utilise un film à trois couches (selon la Figure 3) d'épaisseur totale de 45 µm constitué de :
i) un film PE d'épaisseur de 15 µm perméable aux gaz et aux U.V., chargé avec 3,3% en poids de TiO₂, ce film étant en contact avec le fond de la cellule de mesure ;
ii) une couche imperméable aux gaz et perméable aux U.V. ; et
iii) une couche de renfort perméable aux U.V.

Après introduction de DMDS sous le film et irradiation par les U.V., on constate une diminution linéaire de la concentration en DMDS. Après 50 heures d'irradiation, la concentration en DMDS a diminué de près de 25%.

### Test 3 : Tests sur films transparents VIF-TiO₂

Le film utilisé dans le Test 2 est engagé dans un nouveau test. La température du test est fixée à 45°C, le taux d'humidité relative est de 90%, la concentration initiale en DMDS est de 25500 ppmv. On effectue cette fois le test avec une irradiation équivalente à 1,9 soleils. On constate une diminution de la concentration résiduelle en DMDS sous le film plus rapide avec 1,9 soleils qu'avec 1 soleil. Ce résultat montre clairement l'effet photocatalytique des films.

Par ailleurs, on effectue le suivi de la concentration en dioxyde de carbone (CO₂). Après 60 heures d'irradiation, la concentration en CO₂ mesurée sous le film permet de déduire une minéralisation de 10% du DMDS. Ceci démontre une fois de plus les propriétés photocatalytiques du film testé.

### Test 4 : Tests sur films transparents VIF-TiO₂

On effectue des tests avec un film VIF-TiO₂ d'une épaisseur totale de 80 µm, contenant 3,3% de TiO₂ dans la couche active de PE de 50 µm d'épaisseur. Les conditions sont: 1,9 soleils, 90% d'humidité relative, température: 45°C, concentration en DMDS : 25500 ppmv.

On mesure la concentration en dioxyde de carbone, ce qui permet de déduire un taux de minéralisation de 21% après 60 heures d'irradiation. Ces résultats montrent qu'avec un film de même charge en TiO₂ de 3,3%, mais d'épaisseur plus importante (15 µm contre 50 µm dans ce test), le taux de minéralisation augmente de manière significative.

Ces tests montrent que l'activité photocatalytique est variable en fonction de l'épaisseur du film, plus le film est épais plus l'activité photocatalytique est importante à taux de charge en photocatalyseur constant.

### Test 5 : Tests sur films transparents VIF-TiO₂

On réalise à nouveau des essais comme décrits dans le Test 4 ci-dessus ; en utilisant cette fois-ci un film VIF-TiO₂ d'épaisseur totale de 80 µm, chargé à 1,3% en poids de TiO₂ pour une couche active de PE de 50 µm d'épaisseur. Le taux d'humidité relative est de 90%, la température de 45°C, et la concentration en DMDS de 25500 ppmv.

Le taux de minéralisation, déduit après mesure du CO₂ formé après 60 heures d'irradiation, est de 11%. Ces tests montrent que l'activité photocatalytique est directement liée à la concentration de photocatalyseur présent dans la couche active du film.

### Test 6 : Tests sur films transparents VIF-TiO₂

Film VIF/TiO₂ (film préparé avec un mélange maître Orevac®-TiO₂), humidité relative : 90%, température : 45°C, quantité de TiO₂: 4.5 %, film de 45 µm d'épaisseur totale, dont 15 µm pour la couche de PE active, concentration en DMDS : 32 mg.L⁻¹.

La photocatalyse du DMDS est rapide et la formation de CO₂ est observée déjà après 20 heures d'irradiation. La concentration en CO₂ augmente jusqu'à 3000 ppmv après 60 heures et correspond à 12 % de minéralisation du DMDS.

Ce film préparé avec le mélange maître Orevac®-TiO₂ permet une diminution rapide de la concentration en DMDS.

Tous ces résultats démontrent bien la capacité des films dopés avec du TiO₂ à oxyder de manière photocatalytique le DMDS sous irradiation solaire.

### Test 7 : Test sur films VIF-TiO₂ colorés (noir ou blanc)

Le film testé ici est un film à 4 couches : couche 1 : LDPE de 15 µm ; couche 2 : polyamide-6,6 de 15 µm, couche 3 : LDPE de 15 µm et couche 4 : LDPE avec pigment blanc (TiO₂ pigmentaire micrométrique) de 5 µm. Seule la couche de PE, qui ce trouve au-dessus de la couche colorée (couche 1), contient le TiO₂ photocatalytique.

On teste un film coloré blanc, d'épaisseur totale 45 µm, dont la couche active est une couche LDPE de 15 µm, chargée à 3,3% de TiO₂, sous humidité relative de 90%, à une température de 45°C, et une concentration en DMDS de 31 mg.L⁻¹.

La concentration en DMDS diminue de 1030 ppmv, alors que la formation de CO₂ est d'environ 485 ppmv en 15 heures, ce qui correspond à un taux de minéralisation de 16 %.

Ce test démontre qu'il est possible d'utiliser des films photocatalytiques selon l'invention et qui sont colorés, sans altérer l'efficacité photocatalytique desdits films.

### Exemple 3 (comparatif) :

### Préparation d'un film polyéthylène chargé en TiO₂ anti UV

Le polyéthylène utilisé est un LDPE (polyéthylène linéaire basse densité) avec un «melt flow index» (MFI) de 1 g/10 min (190°C / 2,6 kg) sous forme de granulés, commercialisé par Aldrich (référence : 428078).

Le TiO₂ anti-UV est le Light Stabilizer® 210 de DuPont. Les cristaux de TiO₂ sont recouverts d'une couche d'Al₂O₃ et le diamètre moyen des particules est de 135 nm.

On prépare 14 g de mélange-maître LDPE-TiO₂ 97/3 par mélange de 13,58 g de LDPE et 0,42 g de TiO₂ Light Stabilizer 210 dans une micro-extrudeuse, à une température de 235°C, pour une température moyenne du fondu d'environ 224°C, avec une vitesse des deux vis co-rotatives fixée à 200 tours/minute. Le temps de malaxage après stabilisation du « couple » est de 5 minutes. En sortie d'extrudeuse, on obtient un jonc de 3 mm de diamètre.

Ce mélange-maître (3,33 g) est malaxé à chaud avec 6,67 g de LDPE, selon le protocole décrit à l'étape b) de l'exemple 1, le mélange est ensuite extrudé sous forme de jonc. Pour obtenir un film monocouche d'épaisseur moyenne de 50 µm, on effectue un étirage du jonc selon les techniques classiques connues de l'homme du métier, par exemple selon la technique d'extrusion de film à plat (« cast film » en langue anglaise).

### Test du film polyéthylène chargé en TiO₂ anti UV

Ce film transparent mono-couche de polyéthylène (PE) de 50 µm d'épaisseur, chargé avec 3% en poids de TiO₂ anti-UV, est testé, selon le protocole décrit à l'exemple 2, sous une humidité relative de 92%, à une température de 45°C et une concentration en DMDS de 11052 ppmv. On ne mesure aucune diminution de la concentration en DMDS après 6 jours d'irradiation, par rapport au test témoin.

### Exemple 4 (comparatif) :

### Préparation d'un film polyéthylène chargé en TiO₂ pigmentaire

Pour ce film, on reprend le mode opératoire de l'exemple 3, en remplaçant le TiO₂ anti-UV par du TiO₂, commercialisé par DuPont sous la dénomination Ti-Pure® R-105, qui est du TiO₂ pigmentaire, forme rutile recouvert de SiO₂, et dont la taille moyenne des particules est de 310 nm.

On prépare 14 g de mélange-maître LDPE-TiO₂ 97/3 par mélange de 13,58 g de LDPE et 0,42 g de TiO₂ Ti-Pure® R-105 dans une micro-extrudeuse, à une température de 235°C, pour une température moyenne du fondu d'environ 224°C, avec une vitesse des deux vis co-rotatives fixée à 200 tours/minute. Le temps de malaxage après stabilisation du « couple » est de 5 minutes. En sortie d'extrudeuse, on obtient un jonc de 3 mm de diamètre.

Ce mélange-maître (3,33 g) est malaxé à chaud avec 6,67 g de LDPE, selon le protocole décrit à l'étape b) de l'exemple 1, le mélange est ensuite extrudé sous forme de jonc. Pour obtenir un film monocouche d'épaisseur moyenne de 50 µm, on effectue un étirage du jonc selon les techniques classiques connues de l'homme du métier, par exemple selon la technique d'extrusion de film à plat (« cast film » en langue anglaise).

### Test du film polyéthylène blanc non photocatalytique

Ce film blanc mono-couche de polyéthylène (PE) de 50 µm d'épaisseur et chargé avec 3% en poids de TiO₂ pigmentaire, est testé, selon le protocole de l'exemple 2, sous une humidité relative de 89%, à une température de 45°C et une concentration en DMDS de 10645 ppmv. On ne mesure aucune diminution de la concentration en DMDS après 6 jours d'irradiation, par rapport au test témoin.

## Revendications

1. Film photocatalytique comprenant au moins une couche polymère (1) comprenant au moins un photocatalyseur, ladite couche étant à la fois perméable aux vapeurs d'au moins un composé fumigant, ladite perméabilité étant définie selon la norme NF T 54-195 avec une valeur de perméabilité égale ou supérieure à 0,2 g/m² • heure, et perméable au rayonnement ultra-violet capable d'activer le photocatalyseur, ledit rayonnement étant compris entre 280 nm et 400 nm.

2. Film photocatalytique selon la revendication 1, dans lequel le photocatalyseur est présent sous forme de particules de granulométrie moyenne comprise entre 0,5 nm et 200 nm, de préférence entre 0,5 nm et 180 nm, de préférence encore entre 0,5 nm et 100 nm, avantageusement entre 1 nm et 50 nm, particulièrement entre 10 nm et 40 nm, plus particulièrement entre 15 nm et 30 nm.

3. Film photocatalytique selon la revendication 1 ou la revendication 2, dans lequel la couche polymère (1) est un film polymère comprenant au moins un polymère A choisi parmi les polyoléfines et les polyesters, de préférence bio-sourcés et/ou biodégradables.

4. Film photocatalytique selon la revendication 3, dans lequel le polymère A est choisi parmi les polyoléfines issues de la polymérisation ou de la copolymérisation d'oléfines elles-mêmes choisies parmi l'éthylène, le propylène, le 1-butène, et autres, ainsi que leur mélanges, le polymère A étant de préférence le polyéthylène.

5. Film photocatalytique selon la revendication 3, dans lequel le polymère A est choisi parmi les copolyesters bio-sourcés ou biodégradables, de préférence encore parmi les polylactides, les poly(hydroxyalcanoates), les succinates de poly(alkylène), l'amidon thermoplastique, et autres, ainsi que leurs mélanges.

6. Film photocatalytique selon l'une quelconque des revendications précédentes, dans lequel le photocatalyseur est choisi parmi le dioxyde de titane, le dioxyde de silicium, l'oxyde de zinc, le trioxyde de tungstène, le carbure de silicium, l'oxyde de fer II ou de fer III, le dioxyde de cérium, le dioxyde de zirconium, le dioxyde d'étain, le sulfure de zinc, le sulfure de cadmium, le carbure de silicium, et autres, ainsi que les mélanges de deux ou plusieurs d'entre eux en toutes proportions.

7. Film photocatalytique selon l'une quelconque des revendications précédentes, dans lequel la quantité de photocatalyseur est comprise entre 0,1% et 30% en poids de photocatalyseur par rapport au poids total de la couche polymère (1), de préférence de 0,1 à 20% en poids, de préférence encore de 0,1 à 10% en poids de photocatalyseur par rapport au poids total de la couche polymère (1).

8. Film photocatalytique selon l'une quelconque des revendications précédentes, dans lequel l'épaisseur de la couche polymère (1) est comprise entre environ 5 µm et environ 100 µm, de préférence entre 5 µm et 75 µm, de préférence entre 5 µm et 60 µm, de préférence encore entre 5 µm et à 50 µm.

9. Film photocatalytique selon l'une quelconque des revendications précédentes, comprenant en outre au moins une couche polymère (2) imperméable aux vapeurs dudit au moins un fumigant et perméable au rayonnement ultra-violet.

10. Film photocatalytique selon la revendication 9, dans lequel la couche polymère (2) est choisie parmi les résines polaires azotées et/ou oxygénées, les polyesters et copolyesters, les amidons thermoplastiques et les mélanges de deux ou plusieurs d'entre eux en toutes proportions.

11. Film photocatalytique selon la revendication 9 ou la revendication 10, dans lequel la couche polymère (2) est un polyamide ou un copolyamide choisi parmi les produits de condensation d'un ou plusieurs amino-acides, d'un ou plusieurs lactames, et d'une ou plusieurs diamines avec un ou plusieurs diacides, ainsi que des mélanges de ces monomères.

12. Film photocatalytique selon l'une quelconque des revendications 9 à 11, comprenant en outre au moins un agent compatibilisant dans la couche (1) et/ou la couche (2), de préférence dans la couche (1), et/ou une couche (C) de « compatibilité » ou de « couplage » entre les couches (1) et (2).

13. Film photocatalytique selon l'une quelconque des revendications précédentes, comprenant en outre une ou plusieurs couches de renfort et/ou une ou plusieurs couches colorées.

14. Film photocatalytique selon l'une quelconque des revendications précédentes, dont l'épaisseur totale est comprise entre 10 µm et 300 µm, de préférence entre 20 µm et 150 µm.

15. Procédé de fumigation d'un sol, d'un substrat cultivable ou d'un article, comprenant au moins les étapes suivantes :
a) application dans ledit sol, substrat ou article, et/ou à la surface dudit sol, substrat ou article, d'au moins un fumigant, et
b) couverture totale ou partielle dudit sol, substrat ou article par un film photocatalytique selon l'une quelconque des revendications 1 à 14, avant ou après l'étape a),
c) exposition au rayonnement ultra-violet dudit film photocatalytique, pendant une durée pouvant varier de quelques jours à plusieurs semaines ; et
d) retrait éventuel, total ou partiel ou simple perforation, dudit film photocatalytique.

16. Procédé de fumigation selon la revendication 15, dans lequel le fumigant est choisi parmi le bromure de méthyle, l'iodure de méthyle, l'isothiocyanate de méthyle (MITC), le 1,3-dichloropropène, la chloropicrine, le fluorure de sulfuryle (SO₂F₂), la phosphine, le tétrathiocarbonate ou autres composés générateurs de MITC, les sulfures d'alkyle, les disulfures de dialkyle, les polysulfures de dialkyle, les thiosulfinates et autres, ainsi que les mélanges de deux ou plusieurs d'entre eux en toutes proportions.

17. Procédé selon la revendication 16, dans lequel le fumigant est choisi parmi les composés pesticides volatils soufrés de formule générale (I) :
R-S(O)ₙ-Sₓ-R' (I)
dans laquelle R représente un radical alkyle ou alcényle, de préférence alkyle, contenant de 1 à 4 atomes de carbone, n est égal à 0, 1 ou 2, x prend les valeurs allant de 0 à 4, bornes comprises, et R' représente un radical alkyle ou alcényle, de préférence alkyle,
de préférence le composé pesticide volatil est choisi parmi les composés de formule (I') :
R-S-Sₓ-R' (I')
dans laquelle R et R', identiques ou différents, de préférence identiques, représentent chacun indépendamment l'un de l'autre, un radical alkyle ou alcényle, de préférence alkyle, contenant de 1 à 4 atomes de carbone, et x représente 1, 2, 3 ou 4, de préférence encore le fumigant est le disulfure de diméthyle.

18. Kit de traitement par fumigation comprenant au moins un film photocatalytique selon l'une quelconque des revendications 1 à 14, et au moins un fumigant, de préférence au moins un composé organique volatil soufré, de préférence de formule (I) selon la revendication 16 ou de formule (I') selon la revendication 17, de préférence encore ledit fumigant étant le disulfure de diméthyle.

## Patentansprüche

1. Photokatalytische Folie, umfassend mindestens eine Polymerschicht (1), die mindestens einen Photokatalysator umfasst, wobei die Schicht sowohl für Dämpfe mindestens einer Begasungsverbindung durchlässig ist, wobei die Durchlässigkeit gemäß der Norm NF T 54-195 mit einem Durchlässigkeitswert größer gleich 0,2 g/m² • Stunde bestimmt wird, als auch für Ultraviolettstrahlung, die zur Aktivierung des Photokatalysators in der Lage ist, durchlässig ist, wobei die Strahlung zwischen 280 nm und 480 nm liegt.

2. Photokatalytische Folie nach Anspruch 1, wobei der Photokatalysator in Form von Teilchen mit einer mittleren Teilchengröße zwischen 0,5 nm und 200 nm, vorzugsweise zwischen 0,5 nm und 180 nm, weiter bevorzugt zwischen 0,5 nm und 100 nm, vorteilhafterweise zwischen 1 nm und 50 nm, speziell zwischen 10 nm und 40 nm, spezieller zwischen 15 nm und 30 nm, vorliegt.

3. Photokatalytische Folie nach Anspruch 1 oder Anspruch 2, wobei es sich bei der Polymerschicht (1) um eine Polymerfolie handelt, die mindestens ein Polymer A umfasst, das aus Polyolefinen und Polyestern, vorzugsweise biobasierten und/oder biologisch abbaubaren Polyolefinen und Polyestern, ausgewählt ist.

4. Photokatalytische Folie nach Anspruch 3, wobei das Polymer A aus Polyolefinen ausgewählt ist, die sich aus der Polymerisation oder Copolymerisation von Olefinen ableiten, die wiederum aus Ethylen, Propylen, 1-Buten und anderen sowie Mischungen davon ausgewählt sind, wobei es sich bei dem Polymer A vorzugsweise um Polyethylen handelt.

5. Photokatalytische Folie nach Anspruch 3, wobei das Polymer A aus biobasierten oder biologisch abbaubaren Copolyestern, weiter bevorzugt aus Polylactiden, Poly(hydroxyalkanoaten), Poly-(alkylen)succinaten, thermoplastischer Stärke und anderen sowie Mischungen davon ausgewählt ist.

6. Photokatalytische Folie nach einem der vorhergehenden Ansprüche, wobei der Photokatalysator aus Titandioxid, Siliciumdioxid, Zinkoxid, Wolframtrioxid, Siliciumcarbid, Eisen-II- oder Eisen-IIIoxid, Cerdioxid, Zirconiumdioxid, Zinndioxid, Zinksulfid, Cadmiumsulfid, Siliciumcarbid und anderen und Mischungen von zwei oder mehr davon in beliebigen Anteilen ausgewählt ist.

7. Photokatalytische Folie nach einem der vorhergehenden Ansprüche, wobei die Photokatalysatormenge zwischen 0,1 und 30 Gew.-% Photokatalysator, bezogen auf das Gesamtgewicht der Polymerschicht (1), liegt und vorzugsweise 0,1 bis 20 Gew.-% und weiter bevorzugt 0,1 bis 10 Gew.-% Photokatalysator, bezogen auf das Gesamtgewicht der Polymerschicht (1), beträgt.

8. Photokatalytische Folie nach einem der vorhergehenden Ansprüche, wobei die Dicke der Polymerschicht (1) zwischen ungefähr 5 µm und ungefähr 100 µm, vorzugsweise zwischen 5 µm und 75 µm, vorzugsweise zwischen 5 µm und 60 µm und weiter bevorzugt zwischen 5 µm und 50 µm liegt.

9. Photokatalytische Folie nach einem der vorhergehenden Ansprüche, ferner umfassend mindestens eine Polymerschicht (2), die für Dämpfe des mindestens einen Begasungsmittels undurchlässig und für Ultraviolettstrahlung durchlässig ist.

10. Photokatalytische Folie nach Anspruch 9, wobei die Polymerschicht (2) aus Stickstoff und/oder Sauerstoff enthaltenden polaren Harzen, Polyestern und Copolyestern, thermoplastischen Stärken und Mischungen von zwei oder mehr davon in beliebigen Anteilen ausgewählt ist.

11. Photokatalytische Folie nach Anspruch 9 oder Anspruch 10, wobei es sich bei der Polymerschicht (2) um ein Polyamid oder ein Copolyamid handelt, das aus den Produkten der Kondensation von einer oder mehreren Aminosäuren, einem oder mehreren Lactamen, einem oder mehreren Diaminen mit einer oder mehreren Disäuren sowie Mischungen dieser Monomere ausgewählt ist.

12. Photokatalytische Folie nach einem der Ansprüche 9 bis 11, ferner umfassend mindestens einen Verträglichkeitsvermittler in der Schicht (1) und/oder der Schicht (2), vorzugsweise in der Schicht (1), und/oder eine "Verträglichkeits"- oder "Kupplungs"-Schicht (C) zwischen den Schichten (1) und (2).

13. Photokatalytische Folie nach einem der vorhergehenden Ansprüche, ferner umfassend eine oder mehrere Verstärkungsschichten und/oder eine oder mehrere gefärbte Schichten.

14. Photokatalytische Folie nach einem der vorhergehenden Ansprüche, deren Gesamtdicke zwischen 10 µm und 300 µm und vorzugsweise zwischen 20 µm und 150 µm liegt.

15. Verfahren zur Begasung eines Bodens, eines kultivierbaren Substrats oder eines Gegenstands, das folgende Schritte umfasst:
a) Anwenden mindestens eines Begasungsmittels in dem Boden, Substrat bzw. Gegenstand und/oder auf der Oberfläche des Bodens, Substrats bzw. Gegenstands und
b) vollständiges oder teilweises Bedecken des Bodens, Substrats bzw. Gegenstands mit einer photokatalytischen Folie nach einem der Ansprüche 1 bis 14 vor oder nach Schritt a),
c) Einwirkenlassen von Ultraviolettstrahlung auf die photokatalytische Folie über einen Zeitraum, der von einigen Tagen bis zu mehreren Wochen variieren kann; und
d) gegebenenfalls vollständiges oder teilweises Entfernen oder einfaches Perforieren der photokatalytischen Folie.

16. Begasungsverfahren nach Anspruch 15, bei dem das Begasungsmittel aus Methylbromid, Methyliodid, Methylisothiocyanat (MITC), 1,3-Dichlorpropen, Chlorpikrin, Sulfurylfluorid (SO₂F₂), Phosphin, Tetrathiocarbonat oder anderen MITC erzeugenden Verbindungen, Alkylsulfiden, Dialkyldisulfiden, Dialkylpolysulfiden, Thiosulfinaten und anderen sowie Mischungen von zwei oder mehr davon in beliebigen Anteilen ausgewählt wird.

17. Verfahren nach Anspruch 16, bei dem das Begasungsmittel aus den schwefelhaltigen flüchtigen Pestizidverbindungen der allgemeinen Formel (I):
R-S(O)ₙ-Sₓ-R' (I)
worin R für einen Alkyl- oder Alkenylrest, vorzugsweise einen Alkylrest, mit 1 bis 4 Kohlenstoffatomen, steht, n gleich 0, 1 oder 2 ist, x die Werte im Bereich von 0 bis 4 einschließlich der Grenzen annimmt und R' für einen Alkyl- oder Alkenylrest, vorzugsweise einen Alkylrest, steht,
ausgewählt wird und die flüchtige Pestizidverbindung vorzugsweise aus den Verbindungen der Formel (I'):
R-S-Sₓ-R' (I')
worin R und R' gleich oder verschieden, vorzugsweise gleich, sind und jeweils unabhängig voneinander für einen Alkyl- oder Alkenylrest, vorzugsweise einen Alkylrest, mit 1 bis 4 Kohlenstoffatomen, stehen und x für 1, 2, 3 oder 4 steht, ausgewählt wird und es sich weiter bevorzugt bei dem Begasungsmittel um Dimethyldisulfid handelt.

18. Begasungsbehandlungskit, umfassend mindestens eine photokatalytische Folie nach einem der Ansprüche 1 bis 14 und mindestens ein Begasungsmittel, vorzugsweise mindestens eine schwefelhaltige flüchtige organische Verbindung, vorzugsweise der Formel (I) nach Anspruch 16 oder der Formel (I') nach Anspruch 17, wobei es sich bei dem Begasungsmittel weiter bevorzugt um Dimethyldisulfid handelt.

## Claims

1. Photocatalytic film comprising at least one polymer layer (1) comprising at least one photocatalyst, said layer being both permeable to the vapors of at least one fumigating compound, said permeability being defined according to the NF T 54-195 standard, with a permeability value greater than or equal to 0.2 g/m² • hour, and permeable to ultraviolet radiation capable of activating the photocatalyst, said radiation being between 280 nm and 400 nm.

2. Photocatalytic film according to Claim 1, wherein the photocatalyst is present in the form of particles having an average particle size of between 0.5 nm and 200 nm, preferably between 0.5 nm and 180 nm, more preferably between 0.5 nm and 100 nm, advantageously between 1 nm and 50 nm, particularly between 10 nm and 40 nm and more particularly between 15 nm and 30 nm.

3. Photocatalytic film according to Claim 1 or Claim 2, wherein the polymer layer (1) is a polymer film comprising at least one polymer A chosen from polyolefins and polyesters, preferably biobased and/or biodegradable polyolefins and polyesters.

4. Photocatalytic film according to Claim 3, wherein the polymer A is chosen from polyolefins resulting from the polymerization or from the copolymerization of olefins which are themselves chosen from ethylene, propylene, 1-butene, and the like, and also mixtures thereof, the polymer A preferably being polyethylene.

5. Photocatalytic film according to Claim 3, wherein the polymer A is chosen from biobased or biodegradable copolyesters, more preferably from polylactides, poly(hydroxyalkanoates), poly(alkylene succinates), thermoplastic starch, and the like, and also mixtures thereof.

6. Photocatalytic film according to any one of the preceding claims, wherein the photocatalyst is chosen from titanium dioxide, silicon dioxide, zinc oxide, tungsten trioxide, silicon carbide, iron II oxide or iron III oxide, cerium dioxide, zirconium dioxide, tin dioxide, zinc sulfide, cadmium sulfide, silicon carbide, and the like, and also mixtures of two or more of them in any proportions.

7. Photocatalytic film according to any one of the preceding claims, wherein the amount of photocatalyst is between 0.1% and 30% by weight of photocatalyst relative to the total weight of the polymer layer (1), preferably from 0.1% to 20% by weight, more preferably from 0.1% to 10% by weight of photocatalyst relative to the total weight of the polymer layer (1).

8. Photocatalytic film according to any one of the preceding claims, wherein the thickness of the polymer layer (1) is between approximately 5 µm and approximately 100 µm, preferably between 5 µm and 75 µm, preferably between 5 µm and 60 µm and more preferably between 5 µm and 50 µm.

9. Photocatalytic film according to any one of the preceding claims, also comprising at least one polymer layer (2) impermeable to the vapors of said at least one fumigant and permeable to ultraviolet radiation.

10. Photocatalytic film according to Claim 9, wherein the polymer layer (2) is chosen from nitrogenous and/or oxygen-containing polar resins, polyesters and copolyesters, thermoplastic starches and mixtures of two or more of them in any proportions.

11. Photocatalytic film according to Claim 9 or Claim 10, wherein the polymer layer (2) is a polyamide or a copolyamide chosen from the products of condensation of one or more amino acids, of one or more lactams, and of one or more diamines with one or more diacids, and also mixtures of these monomers.

12. Photocatalytic film according to any one of Claims 9 to 11, also comprising at least one compatibilizing agent in the layer (1) and/or the layer (2), preferably in the layer (1), and/or a "compatibility" or "coupling" layer (C) between the layers (1) and (2).

13. Photocatalytic film according to any one of the preceding claims, also comprising one or more reinforcing layers and/or one or more colored layers.

14. Photocatalytic film according to any one of the preceding claims, the total thickness of which is between 10 µm and 300 µm, preferably between 20 µm and 150 µm.

15. Process for fumigating a soil, a cultivatable substrate or an item, comprising at least the following steps:
a) application in said soil, substrate or item, and/or at the surface of said soil, substrate or item, of at least one fumigant, and
b) total or partial coverage of said soil, substrate or item with a photocatalytic film, according to any one of Claims 1 to 14, before or after step a),
c) exposure of said photocatalytic film to ultraviolet radiation for a period of time which can range from a few days to several weeks; and
d) optional total or partial removal or simple perforation of said photocatalytic film.

16. Fumigation process according to Claim 15, wherein the fumigant is chosen from methyl bromide, methyl iodide, methyl isothiocyanate (MITC), 1,3-dichloropropene, chloropicrin, sulfuryl fluoride (SO₂F₂), phosphine, tetrathiocarbonate or other MITC-generating compounds, alkyl sulfides, dialkyl disulfides, dialkyl polysulfides, thiosulfinates and the like, and also mixtures of two or more of them in any proportions.

17. Process according to Claim 16, wherein the fumigant is chosen from the sulfur-containing volatile pesticidal compounds of general formula (I):
R-S(O)ₙ-Sₓ-R' (I)
in which R represents an alkyl or alkenyl, preferably alkyl, radical containing from 1 to 4 carbon atoms, n is equal to 0, 1 or 2, x takes the values ranging from 0 to 4, limits included, and R' represents an alkyl or alkenyl, preferably alkyl, radical,
preferably the volatile pesticidal compound is chosen from the compounds of formula (I'):
R-S-Sₓ-R' (I')
in which R and R', which may be identical or different, preferably identical, each represent, independently of one another, an alkyl or alkenyl, preferably alkyl, radical containing from 1 to 4 carbon atoms, and x represents 1, 2, 3 or 4, more preferably the fumigant is dimethyl disulfide.

18. Fumigation treatment kit comprising at least one photocatalytic film according to any one of Claims 1 to 14, and at least one fumigant, preferably at least one sulfur-containing volatile organic compound, preferably of formula (I) according to Claim 16 or formula (I') according to Claim 17, said fumigant more preferably being dimethyl disulfide.
